(19)

**Europäisches Patentamt**
**European Patent Office**
**Office européen des brevets**

(11) **EP 4 715 656 A1**

(12) **EUROPEAN PATENT APPLICATION**

(43) Date of publication:
**25.03.2026 Bulletin 2026/13**

(21) Application number: **24306559.6**

(22) Date of filing: **23.09.2024**

(51) International Patent Classification (IPC):
**G06F 30/13** $^{(2020.01)}$ **G06F 30/27** $^{(2020.01)}$
**G06N 3/045** $^{(2023.01)}$

(52) Cooperative Patent Classification (CPC):
**G06F 30/13; G06F 30/27; G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Dassault Systèmes**
  **78140 Vélizy-Villacoublay (FR)**
• **Ecole Polytechnique**
  **91128 Palaiseau Cedex (FR)**

(72) Inventors:
• **Maillard, Léopold**
  **Vélizy-Villacoublay (FR)**
• **Durand, Tom**
  **Vélizy-Villacoublay (FR)**
• **Ovsjanikov, Maks**
  **Palaiseau (FR)**

(74) Representative: **Bandpay & Greuter**
  **11 rue Christophe Colomb**
  **75008 Paris (FR)**

(54) **CONDITIONED 3D LAYOUT PREDICTION**

(57) The disclosure notably relates to a computer-implemented method of using a machine-learning function preconfigured for taking an input 3D layout and a given noise level, and for predicting an output 3D layout. The function is preconfigured with a conditioning dropout with respect to at least one layout parameter. The method further comprises obtaining a set of conditioning inputs and, for each conditioning input, determining one or more conditioning candidate 3D layouts and determining a plurality of perturbed conditioning candidate 3D layouts. The method further comprises, applying the preconfigured function to each perturbed conditioning candidate, in which the one layout parameter is dropped out, computing reconstruction errors, and averaging the reconstruction errors, thereby obtaining a score. This forms an improved solution for predicting 3D layouts.

FIG. 4

**Description**

**TECHNICAL FIELD**

The disclosure relates to the field of computer programs and systems, and more specifically to methods, data structures and systems related to 3D layout prediction.

**BACKGROUND**

Some available solutions for generation of 3D scenes involve machine-learning techniques, such as Generative Adversarial Networks (GAN).

The current prior art presents major limitations while attempting to obtain realistic and diverse scene arrangements. Realistic scene arrangement means that the scene configuration is semantically consistent among objects and between objects and floorplan, as well as physically meaningful. In other words, a realistic scene arrangement tends to promote groups of objects with strong semantic relationships among them and with the floorplan and tends to favor placing the objects in a consistent physical manner. Therefore, a realistic scene arrangement tends to discourage, for example, placing a bed in a kitchen (object semantically inconsistent with the floorplan), placing an oven next to a bed (objects semantically inconsistent between each other), and placing objects without required physical support (e.g., a tea cup floating instead of being placed on a table).

Within this context, there is still a need for an improved solution for predicting 3D layouts.

**SUMMARY**

It is therefore provided a computer-implemented method of using a machine-learning function preconfigured for taking an input 3D layout and a given noise level, and hereinafter referred to as the "use method". The use method comprises obtaining the machine-learning function. A 3D layout has a set of layout parameters including a floorplan, a 3D arrangement of one or more 3D bounding boxes, and a semantic category for each 3D bounding box. Each bounding box is defined in the 3D arrangement by a value of a predetermined set of one or more bounding box parameters. The input 3D layout includes a given floorplan, a first 3D arrangement of one or more given 3D bounding boxes, and, for each given 3D bounding box, a given semantic category. Each bounding box is defined in the first 3D arrangement by a first value of the predetermined set of one or more bounding box parameters. The function is also preconfigured for predicting an output 3D layout. The output 3D layout includes the given floorplan, a second 3D arrangement of the one or more given 3D bounding boxes, and, for each given 3D bounding box, the given semantic category. Each bounding box is defined in the second 3D arrangement by a second value of the predetermined set of one or more bounding box parameters. The function is configured to predict a second value of the predetermined set of one or more bounding box parameters different from the first value of the predetermined set of one or more bounding box parameters. The function is further preconfigured with a conditioning drop-out with respect to at least one layout parameter, the at least one layout parameter including the floorplan and/or the semantic category for each 3D bounding box. The use method further comprises obtaining a set of conditioning inputs. Each conditioning input comprises a distinct value of one layout parameter among the at least one layout parameter, and a same value of each other layout parameter among the floorplan and the semantic category for each 3D bounding box. The use method moreover comprises, for each conditioning input, determining one or more conditioning candidate 3D layouts. Each conditioning candidate 3D layout is a result of an iterative sampling with the preconfigured function. The use method also comprises, for each conditioning input, determining a plurality of perturbed conditioning candidate 3D layouts. Each perturbed conditioning candidate 3D layout is determined by adding a respective noise to a respective conditioning candidate 3D layout. The use method further comprises, for each conditioning input and for each perturbed conditioning candidate 3D layout, applying the preconfigured function to the perturbed conditioning candidate 3D layout, in which the one layout parameter is dropped out, thereby obtaining a respective unconditional output. The use method further comprises, for each conditioning input and for each perturbed conditioning candidate 3D layout, computing a reconstruction error between the respective conditioning candidate 3D layout and the respective unconditional output. The use method also comprises, for each conditioning input, averaging the reconstruction errors over the plurality of perturbed conditioning candidate 3D layouts, thereby obtaining a score.

The use method may comprise one or more of the following features:

- the iterative sampling with the preconfigured function comprises iterating:

  • injecting a noise to the input 3D layout, thereby obtaining a perturbed input 3D layout;
  • applying the preconfigured function at least once to the perturbed input 3D layout, thereby obtaining an output 3D layout; and

- using the output 3D layout as the input of a next iteration,

  wherein optionally the noise has a level which decreases with the depth in the iteration;
- applying the preconfigured function at least once comprises, at each iteration:

  - applying the preconfigured function to the perturbed input 3D layout, thereby obtaining a first output 3D layout;
  - obtaining a first intermediate 3D layout by computing a gradient step between the perturbed input 3D layout and the first output 3D layouts;
  - applying the preconfigured function to the first intermediate 3D layout, thereby obtaining a second output 3D layout; and
  - obtaining a second intermediate 3D layout by computing a gradient step-between the perturbed input 3D layout and the second output 3D layout, thereby obtaining a final 3D layout;

- the one or more conditioning candidate 3D layouts comprise a final result of the iterative sampling;
- adding the respective noise, for the final result of the iterative sampling, comprises sampling a noise level, and sampling the respective noise according to the sampled noise level,
- the one or more conditioning candidate 3D layouts comprise one or more intermediate results of the iterative sampling;
- adding the respective noise, for each intermediate result of the iterative sampling, comprises sampling the respective noise according to the noise level of the intermediate iteration of the iterative sampling which corresponds to the intermediate result;
- the method further comprises ranking conditioning candidate 3D layouts on their respective scores, starting from a lowest score; and/or
- the preconfigured function is parametrized as follows:

$$D_\theta(x_\sigma; \mathcal{F}, c_i, \sigma) = c_{skip}(\sigma) * x_\sigma + c_{out}(\sigma) * S_\theta\big(c_{in}(\sigma)x_\sigma; \mathcal{F}, c_i, c_{noise}(\sigma)\big),$$

where:

- $x_\sigma$ represents the first 3D arrangement of one or more given 3D bounding boxes,
- $\mathcal{F}$ represents the given floorplan,
- $c_i$ is a list of the given semantic categories,
- $\sigma$ is the given noise level,
- $S_\theta(c_{in}(\sigma)x_\sigma; \mathcal{F}, c_i, c_{noise}(\sigma))$ is a noise-conditioned score network having a set of trainable parameters $\theta$,
- $c_{skip}(\sigma)$ is a noise-dependent pre-conditioning coefficient modulating the predicted 3D layout,
- $c_{noise}(\sigma)$ is a noise-dependent coefficient which conditions the noise level within the score network, and
- $c_{in}(\sigma)$ and $c_{out}(\sigma)$ are two noise-dependent coefficients that scale, respectively, $x_\sigma$ and $S_\theta(c_{in}(\sigma)x_\sigma; y, c_{noise}(\sigma))$.

It is further provided a method for machine-learning the machine-learning function used in such a use method, and hereinafter referred to as the "machine-learning method". The machine-learning method comprises obtaining a dataset of ground truth 3D layouts. Each ground truth 3D layout represents a respective scene and includes a respective floorplan, a respective 3D arrangement of one or more 3D bounding boxes, each bounding box being defined by a value of a predetermined set of one or more bounding boxes parameters, and for each 3D bounding box, a respective semantic category. The machine-learning method also comprises obtaining a probability distribution of noise levels. The machine-learning method further comprises, for each ground truth 3D layout, obtaining a respective perturbed 3D layout computable by perturbing at least one bounding box parameter of at least one 3D bounding box of the ground truth 3D layout. The perturbing includes sampling a respective noise level based on the probability distribution. The perturbing also includes, for each respective bounding box parameter of the at least one bounding box parameter, sampling a respective noise value based on the respective noise level and applying the respective noise value to the respective bounding box parameter. The machine-learning method further comprises training the function over the dataset based on a loss which penalizes a dissimilarity metric between each ground truth 3D layout and a respective predicted 3D layout obtainable by applying the function to the respective perturbed 3D layout. The training is performed with a conditioning drop-out with respect to at least one layout parameter, the at least one layout parameter including the floorplan and/or the semantic category for each 3D bounding box.

The machine-learning method may comprise one or more of the following features:

- the dissimilarity metric is of the type:

$$d(\hat{\mathcal{O}}, \mathcal{O}) = \frac{1}{2N}\left(\sum_{\hat{o} \in \hat{\mathcal{O}}} \min_{o \in \mathcal{O}} l(\hat{o}, o) + \sum_{o \in \mathcal{O}} \min_{\hat{o} \in \hat{\mathcal{O}}} l(\hat{o}, o)\right)$$

where:

- $\mathcal{O} = \{o_1, o_2, ..., o_N\}$ is the set of one or more 3D bounding boxes in the ground truth candidate 3D layout,

- $\hat{\mathcal{O}} = \{\hat{o}_1, \hat{o}_2, ..., \hat{o}_N\}$ is the set of one or more 3D bounding boxes in the predicted 3D layout,

- $N$ is the common size of $\mathcal{O}$ and $\hat{\mathcal{O}}$, and
- $l(\hat{o}, o)$ is a differentiable distance,

wherein optionally the differentiable distance further penalizes the dissimilarity in the dimensions and/or in the semantic category between 3D bounding boxes, and for example is of the type:

$$l(\hat{o}, o) = \|\hat{x} - x\|_2^2 + K\left(1 - \delta_d(\hat{o}, o)\,\delta_c(\hat{o}, o)\right)$$

where:

- $\hat{x}$, respectively $x$, is a vector of values of spatial bounding box parameters of $\hat{o}$, respectively $o$,
- $\|\hat{x} - x\|_2^2$ is the Euclidean norm,
- $K$ is a penalty parameter,
- $\delta_d(\hat{o}, o)$ is an indicator function equal to 1 when $\hat{o}$ and $o$ have same dimensions, 0 otherwise, and
- $\delta_c(\hat{o}, o)$ is an indicator function equal to 1 when $\hat{o}$ and $o$ have a same semantic category, 0 otherwise; and/or

- the loss of the trained function is an expectation value $(L(\hat{\mathcal{O}}, \mathcal{O}) = \mathbb{E}_\sigma\left[\lambda(\sigma)\,d(\hat{o}, \mathcal{O})\right])$ of the product $(\lambda(\sigma)\,d(\hat{\mathcal{O}}, \mathcal{O}))$ between the dissimilarity metric $(d(\hat{\mathcal{O}}, \mathcal{O}))$ and a noise-dependent weighting function $(\lambda(\sigma))$.

It is further provided a data structure including a computer program comprising instructions for performing the use method and/or the machine-learning method, and/or a machine-learning function having been trained by the machine-learning method.

It is further provided a device comprising a data storage medium having recorded thereon the data structure.

The device may form or serve as a non-transitory computer-readable medium, for example on a SaaS (Software as a service) or other server, or a cloud based platform, or the like. The device may alternatively comprise a processor coupled to a memory, the memory having recorded thereon the data structure. The device may thus form a computer system in whole or in part (*e.g.* the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 shows a flowchart of an example of the use method;
- FIG. 2 shows a flowchart of an example of the machine-learning method;
- FIG. 3 shows an example of architecture of the machine-learning function;
- FIG. 4 shows a schematic representation of an example of the disclosed solution;
- FIG.s 5 and 6 illustrate the disclosed solution; and
- FIG. 7 shows an example of the system.

## DETAILED DESCRIPTION

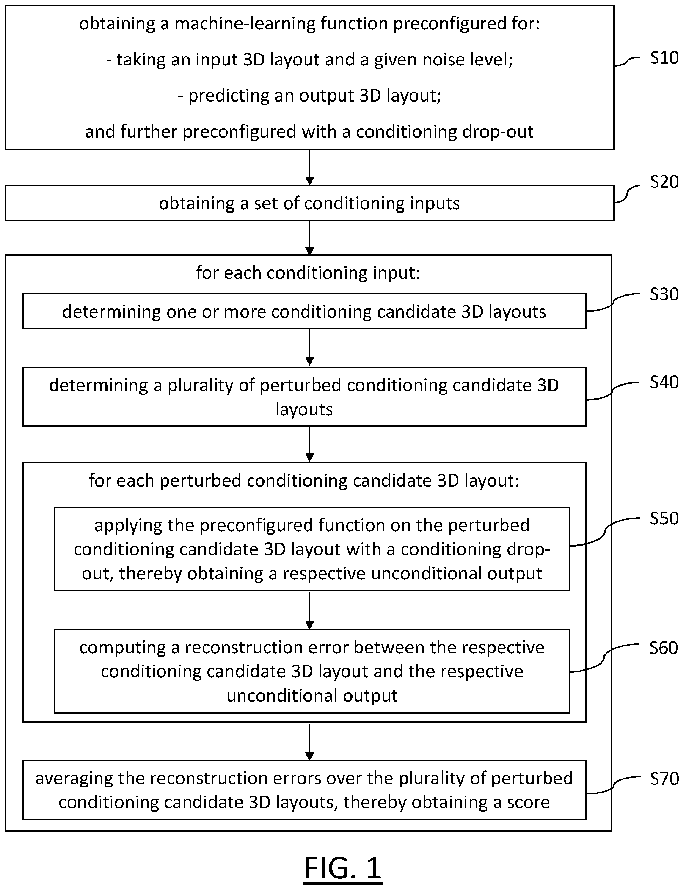

With reference to the flowchart of FIG. 1, it is proposed a computer-implemented method of using a machine-learning function.

The use method comprises obtaining S10 a machine-learning function preconfigured (i.e., pretrained / having been trained) for taking an input 3D layout and a given noise level. A 3D layout has a set of layout parameters including a "floorplan" parameter, a "3D arrangement of one or more 3D bounding boxes" parameter, and a "semantic category for each 3D bounding box" parameter. Each bounding box is defined in the 3D arrangement by a value of a predetermined set of one or more bounding box parameters. The input 3D layout includes a given floorplan (i.e., a given value of the "floorplan" parameter), a first 3D arrangement of one or more given 3D bounding boxes (i.e., a given value of the "3D arrangement of one or more 3D bounding boxes" parameter), and, for each given 3D bounding box, a given semantic category (i.e., a given value of the "semantic category for each 3D bounding box" parameter). Each bounding box is defined in the first 3D arrangement by a first value of the predetermined set of one or more bounding box parameters.

The function is also preconfigured for predicting an output 3D layout. The output 3D layout includes the given floorplan, a second 3D arrangement of the one or more given 3D bounding boxes, and, for each given 3D bounding box, the given semantic category. Each bounding box is defined in the second 3D arrangement by a second value of the predetermined set of one or more bounding box parameters.

The function is configured to predict a second value of the predetermined set of one or more bounding box parameters which is different from the first value of the predetermined set of one or more bounding box parameters. The floorplan and the semantic category for each 3D bounding box are constant variables of the function (i.e., the function does not change their value). In other words, the output of the preconfigured function, which comprises the (predicted) second value of the predetermined set of one or more bounding box parameters, is conditioned on (the value of) the given floorplan and on (the value of) the given semantic category for each given 3D bounding box, i.e., the output of the preconfigured function is a conditional output. In yet other words, the conditional output comprises a (conditionally predicted) second 3D arrangement of the one or more given 3D bounding boxes, each bounding box being defined in the (conditionally predicted) second 3D arrangement by a (conditionally predicted) second value of the predetermined set of one or more bounding box parameters

An output 3D layout may comprise a conditional output of the preconfigured function, i.e., the output 3D layout may include the given floorplan, a (conditionally predicted) second 3D arrangement of the one or more given 3D bounding boxes, each bounding box being defined in the second 3D arrangement by a (conditionally predicted) second value of the predetermined set of one or more bounding box parameters, and, for each given 3D bounding box, the given semantic category. In this case, an output 3D layout is a conditional 3D layout.

The function is further preconfigured with a conditioning drop-out with respect to at least one layout parameter. In other words, the function has been trained using a conditioning drop-out with respect to said at least one layout parameter, and the function can then be used while dropping-out said at least one layout parameter (i.e., the function can be applied even if no value or a null value is provided for said at least one layout parameter). The at least one layout parameter with respect to which the function is preconfigured with a conditioning drop-out includes the floorplan and/or the semantic category for each 3D bounding box, and for example consists of the floorplan, or the semantic category for each 3D bounding box, or of both the floorplan and the semantic category for each 3D bounding box. The value of the other among the at least one layout parameter which is not dropped-out (if any) is a constant variable of the function. In other words, the output of the preconfigured function, which comprises the (predicted) second value of the predetermined set of one or more bounding box parameters, is unconditioned on (the value of) the at least one parameter which has been dropped-out, i.e., the output of the preconfigured

function is an unconditional output. In yet other words, the unconditional output comprises a (unconditionally predicted) second 3D arrangement of the one or more given 3D bounding boxes, each bounding box being defined in the (unconditionally predicted) second 3D arrangement by a (unconditionally predicted) second value of the predetermined set of one or more bounding box parameters.

The use method further comprises obtaining S20 a set of conditioning inputs. Each conditioning input comprises a distinct value of one layout parameter (noted P*) among the at least one layout parameter (i.e., exactly one layout parameter selected within the set referred to as "at least one layout parameter", said set including the "floorplan" parameter and/or the "semantic category for each 3D bounding box" parameter), and a same value of each other layout parameter among the floorplan and the semantic category for each 3D bounding box (i.e., each of the "floorplan" parameter and the "semantic category for each 3D bounding box" which was not selected).

The use method moreover comprises, for each conditioning input, determining S30 one or more conditioning candidate 3D layouts. Each conditioning candidate 3D layout is a result of an (e.g., unique) iterative sampling with the preconfigured function.

An iterative sampling is the application of the preconfigured function one or more times starting from the input 3D layout to predict an output 3D layout, i.e., the iterative sampling with the preconfigured function comprises iterating the preconfigured function one or more times.

The use method also comprises, for each conditioning input, determining S40 a plurality of perturbed conditioning candidate 3D layouts. Each perturbed conditioning candidate 3D layout is determined by adding a respective (sampled) noise to a respective conditioning candidate 3D layout.

The use method further comprises, for each conditioning input and for each perturbed conditioning candidate 3D layout, applying S50 the preconfigured function to the perturbed conditioning candidate, in which the one (distinct/selected) layout parameter P* (i.e. the layout parameter that changes among conditioning candidates that is dropped out, not the constant one) is dropped out, thereby obtaining a respective unconditional output.

The use method further comprises, for each conditioning input and for each perturbed conditioning candidate 3D layout, computing S60 a reconstruction error between the respective conditioning candidate 3D layout and the respective unconditional output. The reconstruction error is a "difference" between the respective conditional output in the conditioning candidate 3D layout and the respective unconditional output. In other words, the reconstruction error is computed by comparing the conditionally predicted second value of the predetermined set of one or more bounding box parameters and the unconditionally predicted second value of the predetermined set of one or more bounding box parameters.

The use method also comprises, for each conditioning input, averaging S70 the reconstruction errors over the plurality of perturbed conditioning candidate 3D layouts, thereby obtaining a score.

Such a use method forms an improved solution for predicting (and potentially ranking) 3D layouts.

Notably, the disclosed computer-implemented use method takes as inputs a preconfigured machine-learning function and a set of conditioning inputs and outputs (i.e., assigns) a respective score to each predicted (by the machine-learning function) conditioning candidate 3D layout associated to a respective conditioning input. The disclosed method, which amounts to a score-based/diffusion method, provides an improved solution for ranking (i.e., classifying) conditioning inputs, and their respective one or more conditioning candidate 3D layouts. In other words, the disclosed use method allows to determine which conditioning candidate 3D layouts are best suited according to the knowledge of the preconfigured machine-learning function, further configured with conditioning drop-out on the conditioning inputs.

The present use method, moreover, forms a Self-Score Evaluation (SSE) approach which allows to leverage the knowledge of the preconfigured function to select relevant sets of conditioning inputs for the generation of 3D layouts. In fact, the proposed SSE approach enables the capabilities of the preconfigured function for 3D layout generation with an efficiently selection of conditioning inputs that are attuned with the capabilities of the preconfigured function and, therefore, lead to more realistic and plausible 3D layouts. Therefore, the disclosed SSE allows to use a single preconfigured function (i.e., a single trained model) to select the conditioning inputs leading to the most realistic 3D layouts.

Furthermore, the present use method allows different ways to obtain the conditioning inputs, thus showing an improved flexibility and synergy for real-world user-driven applications. In examples, the set of conditioning inputs obtained at S20 may be provided by a user, who wants to determine what the best set of conditioning inputs is to solve certain real-world problems, e.g., to determine the best set of objects to be arranged in a given floorplan and/or the best floorplan within which to arrange a given set of objects and/or what is (are) the most relevant object(s) to be inserted or removed from a given 3D layout to optimize (i.e., getting a lower score for) a re-arrangement task. Obtaining (S20) a set of conditioning inputs may comprise using an external third-party source, such as a Large Language Model (LLM), thereby obtaining an LLM-generated set of conditioning inputs. In other words, the obtaining (S20) of a set of conditioning inputs may comprise generating of a set of conditioning inputs by an LLM, so as to the preconfigured function may be combined with (i.e., may take as input) an LLM-generated set of conditioning inputs, that may optionally be selected via the SSE approach. The generation of a set of conditioning inputs by an LLM is particularly useful in the use cases where a significant number (e.g., at least 20) of conditioning inputs should be provided (i.e., obtained), thus avoiding the tedious operation of inputting the set of conditioning inputs for a user of the use method and improving the ergonomics of the present use method.

The function obtained (and used) at S10 in the use method has been preconfigured to be a denoiser. In other words, the preconfigured function (i.e., the denoiser) is conditioned on the noise level used to perturb the input 3D layout. Such a noise conditioning (during the training) provides the preconfigured function with the remarkable ability to denoise the input and predict realistic and diverse 3D scene arrangements.

The function obtained (and used) at S10 has been preconfigured with a machine-learning method. Details of the machine-learning method are presented afterwards in the description.

The function so-configured is applied one or more times, i.e., the preconfigured function is employed in an iterative sampling process. One recalls that the iterative sampling is the application of the preconfigured function one or more times starting from the input 3D layout to predict an output 3D layout, i.e., the iterative sampling with the preconfigured function comprises iterating the preconfigured function one or more times. As the preconfigured function is a denoiser, the iterative sampling amounts to an iterative denoising process, which allows the preconfigured (i.e., trained) function to improve the realism (e.g., natural-looking) and diversity of the predicted 3D arrangements. Thus, the preconfigured function may form a denoising diffusion model.

Moreover, the denoising-based approach improves the 3D arrangement of densely furnished scenes such as real-life scene arrangements, i.e., the trained function predicts more realistic and diverse 3D scenes containing numerous (e.g., at least 20) objects (compared, for example, to autoregressive methods that would predict arrangements where the objects are inserted sequentially, i.e., one-at-a-time). In examples, the proposed method generates plausible (e.g., realistic and diverse) 3D arrangements for scenes which are well-furnished containing at least 20 objects, showing the advantage of being scalable to at least 50 objects.

Furthermore, the disclosed method may amount to a time-efficient iterative sampling process with a trade-off between the sampling time and the quality of the predicted 3D layouts that may be set by a user. In examples, the use method may support efficient batching techniques and/or parallelization capabilities (e.g., on GPUs) to generate 3D scene arrangements for multiple scenes and/or multiple arrangements of a single scene in a single iterative sampling process.

The function so-configured is also flexible, meaning that the preconfigured function can be used to perform different tasks by means of the same disclosed use method, such as but not limited to (partial) 3D arrangement generation and 3D re-arrangement of furnished scene, e.g., containing at least 20 objects to be arranged in a given floorplan.

For instance, in the 3D arrangement generation, the 3D object positions are arbitrarily initialized at the center of the room and the 3D object rotations and/or dimensions are randomly initialized. In such example, the iterative denoising starts from a sufficiently high noise level and is performed for at least 30 steps, thus producing a fair compromise between the quality of the predicted 3D arrangement and the sampling time.

In the partial 3D arrangement generation application, some 3D objects already have their positions and/or dimensions and/or rotation values known. These objects are therefore initialized to their known values, whereas the object to be arranged have positions initialized to the center of the room and rotations randomly initialized. At each denoising step, the output of the model for the known 3D objects (i.e., the 3D objects with known values of their positions and rotations parameters) may be replaced by their original position and orientation (i.e., rotation) values. Note that, the output of the model for the known 3D objects may be replaced by their perturbed position and rotation values that have been noised at a level corresponding to the current sampling step. Either case, these known objects ultimately converge to their initial values throughout the sampling process.

In another application, such as 3D re-arrangements, the 3D object positions and rotations are initialized to their noisy (i.e., perturbed) values. The denoising process may be performed starting from a value of the noise level that is lower than for the task of 3D arrangement generation.

Additionally or alternatively, the use method may comprise further arranging a real-world room according to the predicted layout, i.e., each 3D object eventually has a corresponding real-world physical object positioned and oriented in the real-world room according to the predicted layout. Thus, the present use method may reproduce and rank (i.e., create and store a list of ordered scores) various and realistic 3D scene arrangements that can be realized in the user's home/apartment in the real world. In other words, the method of use is user-driven, i.e., the use method facilitates real-life user interactions to generate and rank 3D layouts that resemble real-world 3D scenes (e.g., in a design planner application).

The use method comprises, for each conditioning input, the averaging S70 of the reconstruction errors over the plurality of perturbed conditioning candidate 3D layouts, thereby obtaining a (respective) score. The obtained score may be a real number. The use method may also comprise comparing the obtained scores corresponding to the respective conditioning inputs. The comparing the obtained scores may further comprise ordering the obtained scores (i.e., ranking them according to a criterion, e.g., from the lowest score to the highest score), creating a (digital) list of the obtained ordered scores, and outputting the created list (i.e., the rank). The outputted list may comprise the list of the scores, each score being associated to a conditioning input.

For example, a user of the use method obtains S20 a set of conditioning inputs, each conditioning input may comprise a floorplan designed (e.g., from their apartment) by the user and/or a list of 3D objects listed by the user (e.g., a list of 3D object of their room, i.e., a real-world room) to generate and rank several 3D layouts and, eventually, select an output 3D layout (e.g., the output with the lowest score, e.g., an output with a 3D arrangement that best suits the purposes of an interior design).

In another example of the use method, the user obtains at S20 a set of conditioning inputs, each conditioning inputs may comprise different lists of 3D objects (e.g., different from each other by one or two 3D objects) to obtain a ranking (and therefore obtaining a feedback from the use method) on the best choice of conditioning inputs.

The preconfigured function is configured for taking as input a 3D layout and a given noise level. The input 3D layout includes a given floorplan, a first 3D arrangement of one or more given 3D bounding boxes and for each given 3D bounding box, a given semantic category. Each bounding box is defined in the first 3D arrangement by a first value of the predetermined set of one or more bounding box parameters. Said differently, in the given floorplan, each 3D bounding box (that is labelled by a semantic category) may be defined by a first value of its spatial attributes that define its position, dimensions and orientation in the scene.

The function is configured for predicting an output 3D layout. The output 3D layout includes the given floorplan, a second 3D arrangement of the one or more given 3D bounding boxes and, for each given 3D bounding box, the given semantic category. Each bounding box is defined in the second 3D arrangement by a second value of the predetermined set of one or more bounding box parameters.

The function is further configured to predict a second value of the predetermined set of one or more bounding box parameters different from the first value of the predetermined set of one or more parameters. The given floorplan and the given semantic category of each given 3D bounding box may be constants of the function, i.e., the function does not change their value. By "a second 3D arrangement of the one or more given 3D bounding boxes", it is meant that the one or more given 3D bounding boxes may be arranged within the same given floorplan, in a way that the predicted second value of its spatial attributes is different from the first value of the spatial attributes (i.e., the input). In other words, the trained function predicts a second value of positions, dimensions and orientation of the 3D bounding boxes, thus predicting a second 3D arrangement of the one or more 3D bounding boxes. The other variables of the function may remain constant, namely the predicted 3D arrangement may be performed in the same given floorplan and with the same list of given semantic categories.

In other words, the preconfigured function is trained to only re-arrange (i.e., using re-positioning and/or re-sizing and/or re-orienting) the 3D bounding box(es) of the input 3D layout.

The preconfigured function is further configured with a conditioning drop-out with respect to the conditioning inputs. Thanks to the preconfigured function being trained with the conditioning drop-out, the preconfigured function acquires the remarkable capability to predict 3D layouts both conditionally and unconditionally, i.e., respectively, with and without (i.e., dropped out) the conditioning inputs provided to the preconfigured function. The capability of the preconfigured function to predict 3D layouts conditionally and unconditionally allows the computation of the scores of the conditioning candidate 3D layouts in the SSE approach.

The term "conditioning drop-out" is a technique used to drop out (i.e., ignore), with a certain drop-out probability $p$, a set (e.g., a subset) of inputs of the machine-learning function during the training phase. In other words, at each training iteration, the conditioning inputs (or a selected subset of conditioning inputs) are dropped out with probability $p$ and replaced by a generic input, such as null vector. Therefore, a machine-learning function configured (i.e., trained) with conditioning drop-out is capable to predict an output both conditionally (i.e., the trained machine-learning function takes into account the conditioning input for predicting the conditional output) and unconditionally (i.e., the machine-learning function ignores the conditioning input for predicting the unconditional output).

The preconfigured machine-learning function, obtained at S10, has been previously trained with a computer-implemented machine-learning method, that shall be discussed later. The machine-learning method features a conditioning drop-out with respect to at least one layout parameter, where the at least one layout parameter includes the given floorplan and/or the semantics category for each bounding box. This means that the function is preconfigured for taking an input 3D layout and a given noise level and for predicting an output 3D layout, both conditionally and unconditionally.

Conditionally means that the preconfigured function takes an input 3D layout and predicts a conditional output. The input 3D layout includes a given floorplan, a first 3D arrangement of one or more given 3D bounding boxes, each bounding box being defined in the first 3D arrangement by a first value of the predetermined set of one or more bounding box parameters, and, for each given 3D bounding box, the given semantic category.

Unconditionally means that the preconfigured function takes an input 3D layout without at least one layout parameter, the at least layout parameter includes the floorplan and/or the semantic category for each 3D bounding box in the first 3D arrangement of one or more given 3D bounding boxes, and predicts an unconditional output.

The use method also comprises obtaining S20 a set of conditioning inputs. A conditioning input comprises a distinct value of one layout parameters among the at least one layout parameter, and a same value of each other layout parameter among the floorplan and the semantic category for each 3D bounding box. In examples, the at least one layout parameter (i.e., the parameter(s) that may be dropped out) may be a floorplan and/or the semantic category for each 3D bounding box in the first 3D arrangement of one or more given 3D bounding boxes. A set of conditioning inputs may be, e.g., one or more lists of semantic categories associated to each 3D bounding box in the first 3D arrangement. A set of conditioning inputs may be, e.g., provided by a user and/or generated by a LLM and/or generated by a separately trained model for 3D layout generation.

The use method moreover comprises, for each conditioning input, determining S30 one or more conditioning candidate 3D layouts.

The use method adopts an iterative sampling with the preconfigured function obtained at S10. One recalls that the iterative sampling is the application of the preconfigured function one or more times starting from the input 3D layout to predict an output 3D layout, i.e., the iterative sampling with the preconfigured function comprises iterating the preconfigured function one or more times. As the preconfigured function is a denoiser, the iterative sampling amounts to an iterative denoising process, which allows the preconfigured (i.e., trained) function to improve the realism (e.g., natural-looking) and diversity of the predicted 3D arrangements. Thus, the preconfigured function may form a denoising diffusion model.

Each conditioning candidate 3D layout is a result of an (e.g., unique) iterative sampling with the preconfigured function. The result of an (e.g., unique) iterative sampling with the preconfigured function is a predicted 3D layout which is a conditioning candidate 3D layout.

In examples, the one or more conditioning candidate 3D layouts comprise a final result of the iterative (conditional) sampling and/or the one or more conditioning candidate 3D layouts comprise one or more intermediate (e.g., consecutive) results of the iterative (conditional) sampling (i.e., the results of the steps of the iterative sampling). In other words, the result of an (e.g., unique) iterative sampling with the preconfigured function comprises a final result (i.e., a 3D layout) of the (e.g., unique) iterative sampling and/or one or more intermediate results (i.e., one or more intermediate 3D layouts), each intermediate result being the intermediate (e.g., consecutive, e.g., between step 10 and step 40) outputs of each respective application of the preconfigured function in the (e.g., unique) iterative sampling. Therefore, for each conditioning input, the use method comprises determining one or more conditioning candidate 3D layouts using an (e.g., unique) iterative sampling, which comprises one or more applications of the preconfigured function. The iterative sampling may be an iterative conditional sampling, i.e., an iterative sampling with conditioning inputs. The one or more conditioning candidate 3D layouts may be the final result of the full (i.e., the entire, the complete) iterative sampling with the preconfigured function and/or the one or more conditioning candidate 3D layouts may be the intermediate (e.g., consecutive) results of each of the one or more applications of the preconfigured function in the iterative sampling.

The use method further comprises, for each conditioning input, determining S40 a plurality of perturbed conditioning candidate 3D layouts. Each perturbed conditioning candidate 3D layout is determined by adding a respective (sampled) noise to a respective conditioning candidate 3D layout. Each perturbed conditioning candidate 3D layout corresponds to a respective conditioning candidate 3D layout in which the value of the predetermined set of one or more bounding box parameters is perturbed by adding a respective noise.

In examples, adding the respective noise, for the (same) final result of the iterative sampling, comprises sampling a noise level, and sampling the respective noise according to the sampled noise level. Additionally or alternatively, adding the respective noise, for each (different) intermediate result of the iterative sampling, comprises sampling the respective noise according to the noise level of the intermediate iteration of the iterative sampling which corresponds to the intermediate result.

The use method also comprises, for each conditioning input and for each perturbed conditioning candidate 3D layout, applying S50 the preconfigured function on the perturbed conditioning candidate, in which the one layout parameter is dropped out, thereby obtaining a respective unconditional output. In other words, the preconfigured function takes as input a perturbed conditioning candidate 3D layout (e.g., the perturbed final result of the iterative sampling and/or the perturbed intermediate result of the iterative sampling), corresponding to a respective conditioning input, drops out the at least one layout parameter (e.g., the list of the semantic categories for each 3D bounding box in the 3D arrangement of one or more 3D bounding boxes), and outputs a respective unconditional output. Thus, the use method comprises, for each conditioning input and for each perturbed conditioning candidate 3D layout, a one-step (i.e., one time) unconditional denoising, i.e., application of the preconfigured function with conditioning drop-out, thereby obtaining a respective unconditional output.

The use method further comprises, for each conditioning input and for each perturbed conditioning candidate 3D layout, computing S60 a reconstruction error between the respective conditioning candidate 3D layout and the respective unconditional output. The reconstruction error is a "difference" (e.g., a distance between the outputs of the preconfigured function) between the respective conditional output in the conditioning candidate 3D layout and the respective unconditional output. In other words, the reconstruction error is computed by comparing the conditionally predicted second value of the predetermined set of one or more bounding box parameters and the unconditionally predicted second value of the predetermined set of one or more bounding box parameters. In examples, such a difference may be computed using a dissimilarity metric. Still in examples, the reconstruction error may be computed either after the iterative sampling or during the iterative sampling, depending on whether the one or more conditioning candidate 3D layouts comprise a final result of the iterative sampling or the one or more conditioning candidate 3D layouts comprise one or more intermediate results of the iterative sampling. In the first example, upon having generated the conditioning candidate 3D layout with the iterative conditional sampling and having generated the respective unconditional output, the reconstruction error is computed using a dissimilarity metric between the respective conditional output in the conditioning candidate 3D layout and the respective unconditional output. In the second example, instead, at each iteration of the iterative conditional sampling (e.g., between step 10 and step 40), each respective intermediate (perturbed) conditioning candidate 3D layout is taken as the input of the one-step unconditional denoising, thus generating an intermediate unconditional output. The reconstruction error is computed, at each iteration of the iterative conditional sampling, between the intermediate conditional output in the conditioning candidate 3D layout and the respective (intermediate) unconditional output using a dissimilarity metric.

The use method also comprises, for each conditioning input, averaging S70 the reconstruction errors over the plurality of perturbed conditioning candidate 3D layouts, thereby obtaining a score (e.g., a real number).

In examples, the use method may comprise ranking conditioning candidate 3D layouts based on their respective scores, starting from a lowest score, i.e., the best conditioning candidate 3D layout is that one with the lowest score.

Additional optional features of the iterative sampling with the preconfigured function are now discussed.

The iterative sampling with the preconfigured function, i.e., the application of one or more times of the preconfigured function, may comprise injecting a noise to the input 3D layout, thereby obtaining a perturbed input 3D layout, applying the preconfigured function at least once to the perturbed input 3D layout, thereby obtaining an output 3D layout (e.g., either (i) as the direct result of the application one time of the preconfigured function, or (ii) as a result obtained by the application one time of the preconfigured function and then processing the obtained output, or (iii) as a result obtained by the application several times of the preconfigured function, each time starting from the direct result of the application the previous time of the preconfigured function or from a result obtained by the application the previous time of the preconfigured function and then processing the obtained output), and, using the output 3D layout as the input of a next iteration.

The iterative sampling with preconfigured function may comprise a noise which has a level which decreases with the depth in the iteration. In particular, at each iteration, the injection of a noise to the input 3D layout may include a noise level scheduling, wherein the injected noise has a level that may decrease with the depth in the iteration. Such a noise level scheduling allows for an improvement of the quality of the predicted 3D layouts. The preconfigured function, during the inference phase, is thus best optimized to denoise an input 3D layout that has been perturbed at different noise levels. In other words, the preconfigured function being noise-conditioned, has the ability to denoise the input 3D layout to generate (i.e. predict) realistic 3D layouts.

Furthermore, applying the preconfigured function at least once may comprise, at each iteration of the iterative sampling, the following optional steps. First, the preconfigured function may be applied to the perturbed input 3D layout, thereby obtaining a first output 3D layout. Second, a first intermediate (e.g., middle) 3D layout may be obtained by computing a gradient step between the perturbed input 3D layout and the first output 3D layout. Next, the preconfigured function may be applied to the first intermediate 3D layout, thereby obtaining a second output 3D layout. Finally, a second intermediate (e.g., middle) 3D layout may be obtained by computing a gradient step between the perturbed input 3D layout and the second output 3D layout, thereby obtaining a final 3D layout. These optional steps are collectively called 2nd order sampling steps, because these steps are performed at each iteration within the iterative sampling. The implementation of the 2nd order sampling steps improves the generation of precise and natural-looking 3D scenes while reducing the number of computationally costly neural evaluations (i.e., the applications of the preconfigured function). From a 3D object placed at some initial position, by applying a noise step (i.e., applying the noise), a perturbed 3D object may be obtained. The perturbed 3D object is placed at its respective noisy position. First, the function may be applied to the perturbed 3D object, thereby obtaining a first model prediction where the 3D object may be placed at a first predicted position. Second, a first intermediate position (e.g., middle) may be computed by applying a gradient step between the noisy position and the first predicted position. Next, the trained function may be applied to the 3D object placed at the computed intermediate position, thereby obtaining a second model prediction where the 3D object is placed at a second predicted position. Finally, a second intermediate (e.g., middle) position may be computed by applying a gradient step between the noisy position and the second predicted position, thereby obtaining a final predicted position.

The preconfigured function may be parametrized by a noise-conditioned denoiser. The parametrization may be of the type:

$$D_\theta(x_\sigma; \mathcal{F}, c_i, \sigma) = c_{skip}(\sigma) * x_\sigma + c_{out}(\sigma) * S_\theta(c_{in}(\sigma)x_\sigma; \mathcal{F}, c_i, c_{noise}(\sigma)), \text{ where:}$$

- $x_\sigma$ represents the first 3D arrangement of one or more given 3D bounding boxes (in a perturbed 3D layout considered as input of the function during the training),
- $\mathcal{F}$ represents the given floorplan,
- $c_i$ is a list of the given semantic categories (each given semantic category being associated to the given 3D bounding boxes),
- $\sigma$ is the given noise level,
- $S_\theta(c_{in}(\sigma)x_\sigma; \mathcal{F}, c_i, c_{noise}(\sigma))$ is a noise-conditioned score network having a set of trainable parameters $\theta$,
- $c_{skip}(\sigma)$ is a noise-dependent pre-conditioning coefficient modulating the predicted 3D layout,
- $c_{noise}(\sigma)$ is a noise-dependent coefficient which conditions the noise level within the score network, and
- $c_{in}(\sigma)$ and $c_{out}(\sigma)$ are two noise-dependent coefficients that scale, respectively, $x_\sigma$ and $S_\theta(c_{in}(\sigma)x_\sigma; y, c_{noise}(\sigma))$.

Such a parametrization facilitates the training of the function and helps the function to learn (i.e., to capture) relationships between the perturbed and clean configurations.

The noise-conditioned denoiser $D_\theta(x_\sigma; \mathcal{F}, c_i, \sigma)$, that parametrizes the preconfigured function, may take as input the perturbed spatial attributes represented by the vector $x_\sigma$. The noise-conditioned denoiser may also take as input the given noise level and additional conditioning inputs. The conditioning inputs $\mathcal{F}, c_i$ may represent the given floorplan and the given semantic category of each of the one or more given 3D bounding boxes. The noise-conditioned denoiser may output the predicted 3D layout. The denoiser network may be noise-conditioned as the network has knowledge to predict a "clean" configuration (i.e., a precise and diverse scene arrangement) from a "messy" configuration (i.e., a perturbed scene arrangement) by performing a major object arrangement (for perturbations with high level of noise) or a minor objects arrangement (for perturbations with low level of noise). Such a feature provides the so-trained function with the ability to denoise a perturbed configuration at any (e.g., arbitrary) noise level.

The parametrization of the noise-conditioned denoiser may include a noise-conditioned score network $S_\theta$ having a set of trainable parameters $\theta$. Score-based generative models are a class of deep generative models that employ a neural network to learn the score (i.e., the gradient of log probability density function) of a noise level dependent marginal distribution obtained by perturbing training samples with noise (e.g., Gaussian) at different levels. In other words, score-based generative models are trained to model a data distribution by denoising samples that have been perturbed at different noise levels. The parameterization of the score-based objective may be carefully designed to facilitate learning the underlying data distribution. This parametrization may involve performing noise-dependent modulation of the score network's output, as well as scaling of the model's inputs, outputs and noise level. Indeed, the noise-conditioned score network may take as input the rescaled vector $c_{in}(\sigma)x_\sigma$, where $c_{in}(\sigma)$ is a noise-dependent coefficient. The noise-conditioned score network may also take as input the noise-dependent coefficient $c_{noise}(\sigma)$, which conditions the noise level within the score network. Additionally, the noise-conditioned score network may be conditioned by the conditioning inputs $\mathcal{F}$, $c_i$, representing the given floorplan and the given semantic category. The output of the noise-conditioned score network $S_\theta(c_{in}(\sigma)x_\sigma; \mathcal{F}, c, c_{noise}(\sigma))$ may also be rescaled by another noise-dependent coefficient $c_{out}(\sigma)$. In examples, the coefficients may be set as follows:

$$c_{skip} = \frac{\sigma_{data}^2}{\sigma_{data}^2 + \sigma^2}, \quad c_{in} = \frac{1}{\sqrt{\sigma_{data}^2 + \sigma^2}}, \quad c_{out} = \frac{\sigma \cdot \sigma_{data}}{\sqrt{\sigma_{data}^2 + \sigma^2}}, \quad c_{noise} = \frac{\log \sigma}{4}.$$

In the above formulae, $\sigma_{data}$ is the standard deviation of the training dataset and is computed before the training phase.

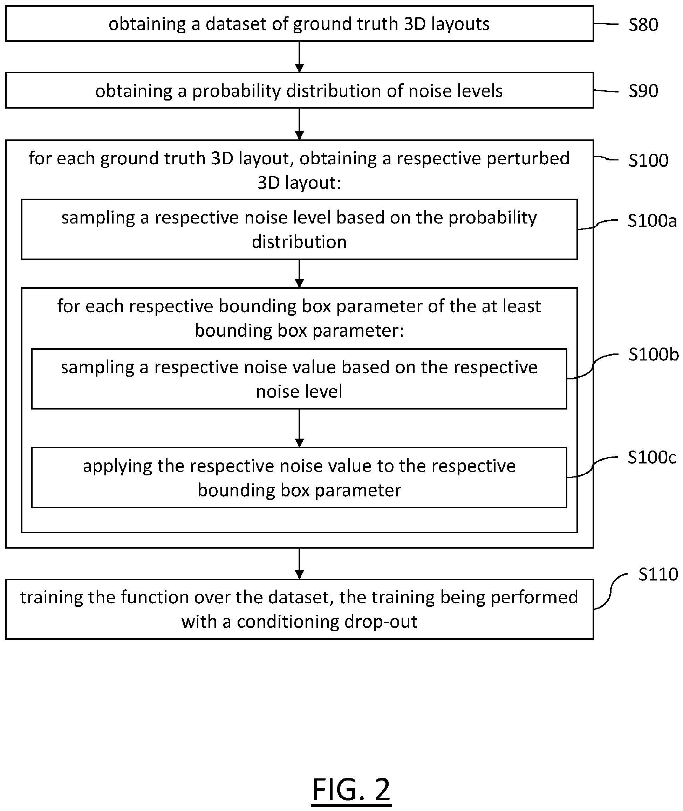

With reference to the flowchart of FIG. 2, it is proposed a computer-implemented method for machine-learning the machine-learning function, i.e., a machine-learning method for training a function with a conditioning drop-out, and therefore obtaining a preconfigured function at step S10 of the computer-implemented method. The machine-learning method comprises obtaining S80 a dataset of ground truth 3D layouts. Each ground truth 3D layout represents a respective scene. Each ground truth 3D layout includes a respective floorplan, a respective 3D arrangement of one or more 3D bounding boxes, and, for each 3D bounding box, a respective semantic category. Each bounding box is defined by a value of a predetermined set of one or more bounding boxes parameters.

The machine-learning method further comprises obtaining S90 a probability distribution of noise levels. In examples, the probability distribution obtained at S90 may be a Gaussian distribution.

The machine-learning method also comprises, for each ground truth 3D layout, obtaining S100 a respective perturbed 3D layout. The respective perturbed 3D layout is a 3D layout computable (e.g., having been computed, e.g., the machine-learning method including such computing) by perturbing (e.g., the machine-learning method comprising such perturbing) at least one bounding box parameter of at least one (e.g., each) 3D bounding box of the ground truth 3D layout. In other words, the machine-learning method may include the computation of at least one (e.g., each) respective perturbed 3D layout, and/or the retrieval (e.g., on local or distant memory) or reception (e.g., from a remote third-party computer system) of at least one (e.g., each) respective perturbed 3D layout, whereby the retrieved or received at least one respective perturbed 3D layout has been computed beforehand. The perturbing includes sampling S100a a respective noise level based on the probability distribution. The perturbing also includes, for each respective parameter of the at least one parameter, sampling S100b a respective noise value based on the respective noise level, and applying S100c the respective noise value to the respective bounding box parameter.

The machine-learning method moreover comprises training S110 (and outputting) a function. The function is configured (after the training S110) for taking an input 3D layout and a given noise level, and for predicting (i.e., outputting or generating) an output 3D layout.

The training S110 is performed over the dataset based on a loss which penalizes a dissimilarity metric between each ground truth 3D layout and a respective predicted 3D layout, wherein the respective predicted 3D layout is obtainable (i.e., can be obtained) by applying the function to the respective perturbed 3D layout.

The training S110 is further performed with a conditioning drop-out with respect to at least one layout parameter, the at least one layout parameter including the floorplan and/or the semantic category for each 3D bounding box.

Therefore, the function is configured to become a denoiser, which is able to denoise the input 3D layout such that it is transformed in an output predicted 3D layout which is more realistic. The function so-configured is also flexible, meaning that the trained function can be used to perform different tasks, as discussed earlier.

The function trained at S110 is also able to output a predicted 3D layout, conditionally or unconditionally, thanks to the drop-out during the training. Moreover, the machine-learning/training with conditioning drop-out reduces overfitting of the training layouts.

The neural network architecture of the preconfigured function may be as described in European Patent Application No. EP24306557.0 filed on 23 September 2024, which is incorporated by reference in this respect. In particular, the neural network architecture may be according to any example described in European Patent Application No. EP24306557.0.

For example, the preconfigured function may comprise an architecture including a (noise-aware) transformer.

The transformer may take as input a concatenation of equal-length representations (i.e., embeddings, for example in $\mathbb{R}^{768}$ ). In particular, the transformer may take a concatenation of a representation of the given noise-level, a first representation of each given 3D bounding box, and a representation of the given floorplan. The transformer may output a representation of the predicted 3D layout, including a second representation of each given 3D bounding box.

The preconfigured function may further comprise encoders to generate the (e.g., equal-length) representations taken as input by the transformer.

In examples, the function may comprise a noise encoder which generates the representation of the given noise level.

The preconfigured function may comprise a 3D object encoder which generates the first representation of each given 3D bounding box. The 3D object encoder may be optionally configured for generating a respective representation of each parameter and a representation of the semantic category, and for concatenating all the generated representations.

The preconfigured function may further comprise a floor encoder which generates the representation of the given floorplan. The floor encoder may include a sampling module for generating a sampling of the given floorplan. The sampling of the given floorplan may comprise sampling e.g., a fixed number of 3D points (e.g., 250 evenly spaced 3D points) on the contour (i.e., the perimeter) of the floorplan. Such sampling allows to get a 3D cloud representation of the floorplan as input for a point-cloud encoder. The floor encoder may also include a point-cloud encoder for processing the sampling.

The preconfigured function may further include a MLP which takes as input the representation of the predicted 3D layout and outputs a third representation of each given 3D bounding boxes.

Further optional features of the neural network architecture and the preconfigured function are provided on page 20 line 3 to page 24 line 30 of the description as filed of European Patent Application No. EP24306557.0.

The machine-learning method uses a data-driven approach which allows the function to learn arrangement patterns and relationships among objects and between objects and the constrained environment to predict realistic 3D layouts. In other words, the data-driven approach of the machine-learning method allows the trained function to learn the interactions (i.e., relations) among 3D objects (i.e., the semantic consistency) and between 3D objects and the constrained environment (i.e., the spatial reasoning) solely from the training dataset.

In examples, the training dataset obtained at S80 may include realistic and diverse ground truth 3D layouts, each ground truth 3D layout representing a 3D scene. The 3D scenes may be obtained from digital 3D scenes dataset and/or from real-world 3D scenes. An example of a digital 3D scene dataset may be the HomeByMe® dataset or any subset thereof which may contain at least more than a thousand scenes (e.g., 10K scenes) that are densely furnished, e.g., containing at least 20 objects.

The machine-learning method is moreover trained over the dataset based on a loss that penalizes dissimilarities between a ground truth 3D layout and a respective predicted 3D layout. In particular, such a loss may be invariant under permutations of identical 3D objects. Such an option may facilitate the training and may avoid penalizing predicted 3D layouts where identical objects are interchanged with respect to the ground truth 3D layout, thus enforcing the diversity of the 3D scene generation.

In addition, the machine learning method adopts a denoising approach to generate the predicted output. The denoising approach has better performances with respect to other classes of existing generative models, such as GAN models. The machine-learning method includes the injection of different noise levels based on an obtained S90 probability distribution to perturb the samples of the training dataset. In addition, the model (i.e., denoiser) is "noise-conditioned", in the sense that it is configured to be applied to an input sample with a given value of the noise level (i.e., the noise level is given as input to the model, as a "condition"). Such a noise-based approach allows the trained function to learn from the perturbed (i.e., noisy) dataset, thus providing the trained function with the remarkable ability to denoise the input and predict realistic and diverse 3D scene arrangements. Said differently, the machine-learning method may train a function which best "denoises" the input 3D layout at any (i.e., arbitrary) noise level to predict realistic (i.e., natural-looking) 3D layouts.

Furthermore, the denoising-based approach improves the 3D arrangement of densely furnished scenes such as real-life scene arrangements, i.e., the trained function predicts more realistic and diverse 3D scenes containing numerous (e.g., at least 20) objects (compared, for example, to autoregressive methods that would predict arrangements where the objects are inserted sequentially, i.e., one-at-a-time). In examples, the proposed method generates plausible (e.g., realistic and diverse) 3D arrangements for scenes which are well-furnished containing at least 20 objects, showing the advantage of being scalable to at least 50 objects. The dataset obtained at S80 may comprise ground truth 3D layouts containing at least 20 objects and/or ground truth 3D layouts containing at least 40 objects. Respectively, the input 3D layout obtained at S10 may contain at least 20 objects or at least 40 objects. The proposed solution, in fact, achieves better (i.e., more accurate) results in terms of physical consistency and realism of predicted 3D layouts, because the denoising approach allows the trained function to learn 3D objects relationships at the same time, i.e., to acquire the nontrivial interdependence among 3D objects and between each 3D object and the given floorplan, e.g., with self-attention mechanisms. At the same time (i.e., simultaneously) means that during the training of a function S100, the first value of the predetermined set of one or more black box parameters of each 3D bounding box in the first 3D arrangement may be inputted at the same time. Said differently, the function may take as input all 3D objects in the input 3D layout at the same time. In other words, the trained function captures all the spatial and semantic relationships to obtain realistic and diverse scene arrangements. Likewise, the second value (i.e., the value predicted by the function) of the predetermined set of one or more parameters of each 3D bounding box in the second 3D arrangement may be also outputted at the same time (instead of one object after the other, e.g., one object at a time). Such a simultaneous processing of the one or more parameters of each 3D bounding box amounts to a better object grouping, i.e., the ability of the function to identify objects that may be associated together in the predicted 3D arrangement.

The preconfigured function trained according to the machine-learning method above, obtained at S10 and applied in the computer-implemented method, takes as input a 3D layout and a given noise level.

Each 3D layout is a set of data that includes a given floorplan, a 3D arrangement of one or more 3D bounding boxes, and, for each 3D bounding box, a respective semantic category. In other words, a 3D layout represents the arrangement of one or more 3D bounding boxes within a given floorplan. A 3D bounding box of a 3D object is a smallest rectangular cuboid that encloses the 3D object; with or without orienting constraints (such as a constraint that the cuboid must have a face parallel to a horizontal plane). A 3D bounding box is, thus, characterized by its spatial attributes, (i.e., its position, its dimensions, and optionally its -unconstrained- orientation parameters) and by its semantic category (i.e., a class of objects, e.g., having the same function, e.g., a book, a chair, etc.). The predetermined set of one or more bounding box parameters may describe the spatial attributes of a 3D object. Each object spatial attribute may have an individual real-world interpretation. In examples, the predetermined set of one or more bounding box parameters may include the 3D position coordinates, the three dimensions (i.e., height, depth and length), and at least one parameter representing the orientation of the object (e.g., cosine and sine of an angle around the vertical axis). Thus, the predetermined set of one or more bounding box parameters may comprise or consist of eight parameters. The use of 3D bounding boxes captures the three-dimensional positionings of 3D objects. Therefore, thanks to the use of 3D bounding boxes, the trained function predicts precise and realistic 3D positioning and sizing of 3D objects. In particular, the trained function, and consequently the method of use (i.e., the computer-implemented method that obtains such a preconfigured function at S10), predicts 3D layouts that show physically consistent positionings in three dimensions, thus avoid subtle flaws that break the perceived validity of the overall scene, such as overlapping, floating or out-of-bound objects, inaccessible areas and inconsistent objects positioning.

A floorplan is data that describe the plan of the scene wherein the 3D objects may be arranged, i.e., it represents the corners of the room. Therefore, a floorplan sets the boundary of the 3D scene arrangement and it conditions the 3D output layout. The floorplan may be a obtained at S80 from external 3D databases in the machine learning method. During the training, the floorplan may be rotated by a random angle along the vertical axis. The floorplan inputted at S10 in the method of use may be imported from the real world by means of 3D scanning technologies.

Likewise, the 3D objects may be obtained at S80 from external database and/or from an online catalog in the machine learning method. During the inference, the 3D objects inputted at S10 may be imported from the real world.

The given noise level is sampled S100a from an obtained probability distribution in the machine learning method. In examples, the probability distribution obtained at S90 may be a Gaussian distribution.

During the training, the noise level is introduced to perturb the dataset, i.e., for each ground truth 3D layout a respective perturbed 3D layout is obtained and/or computed. High levels of noise mean that the perturbed 3D layout is "far" from the ground truth 3D layout; low levels of noise mean that the perturbed 3D layout is "close" to the ground truth 3D layout. In other words, the machine learning method, for each ground truth 3D layout, comprises obtaining S100 a respective perturbed 3D layout by sampling S100a different noise levels based on the probability distribution, and, for each respective parameter of the at least one parameter, sampling at S100b different noise values based on the respective noise levels and applying S100c the respective noise value to the respective parameters of each of the one or more 3D bounding boxes in the 3D arrangement. The function acquires, therefore, the ability to predict 3D scenes that have been perturbed at different noise levels.

The obtaining S100 of at least one (e.g., each) respective perturbed 3D layout may comprise perturbing at least one parameter of at least one (e.g., each) 3D bounding box of the ground truth 3D layout, or retrieving (e.g., on local or distant memory) or receiving (e.g., from a remote computer) the result of such perturbing. The perturbing includes sampling S100a a respective noise level based on the probability distribution within a real interval. The noise level is a positive (e.g., real) number. The noise level may be the magnitude at which the parameters of the 3D bounding boxes (i.e., the spatial attributes) are perturbed. The noise level may be the absolute value of a scalar drawn from the probability distribution. In examples, a

noise level may be drawn from a Gaussian distribution $\sigma = abs[N(0, \sigma_s)]$, where $\sigma_s$ may for example be higher than 0.1 and/or lower than 0.5 (such as $\sigma_s = 0.23$) and may be set experimentally so that, during the inference phase, the trained model generates 3D arrangements from configurations perturbed with both sufficiently low and high levels of noise. The perturbing further includes, for each respective parameter of the at least one parameter, sampling S100b a respective noise value based on the respective noise level (e.g., $\varepsilon = N(0, 1)$) and applying S100c the respective noise value (e.g., $\varepsilon\sigma$)

to the respective parameter (e.g., the respective parameter $p$ is perturbed as $p_\sigma = p + \varepsilon\sigma$).

The obtained dataset S80 of ground truth scenes may additionally be augmented by a random rotation of the scenes along the vertical axis; this random data augmentation may help improving the training to predict arrangement scenes with walls not aligned with at least one coordinate axis.

The training of the function is performed over the training dataset (e.g., HomeByMe®'s dataset) of ground truth 3D layouts and it is based on a loss which penalizes a dissimilarity metric between each ground truth 3D layout and a respective predicted 3D layout obtainable by applying the function to the respective perturbed 3D layout. The respective perturbed 3D layout may be fed as input of the trained function to obtain the respective predicted 3D layout. Therefore, the training loss may evaluate the "distance" between each ground truth 3D layout and the respective predicted 3D layout. The training loss may privilege the predicted 3D layout "closer" to the ground truth 3D layout.

In examples, the dissimilarity metric may be of the type:

$$d(\hat{\mathcal{O}}, \mathcal{O}) = \frac{1}{2N}\left(\sum_{\hat{o} \in \hat{\mathcal{O}}} \min_{o \in \mathcal{O}} l(\hat{o}, o) + \sum_{o \in \mathcal{O}} \min_{\hat{o} \in \hat{\mathcal{O}}} l(\hat{o}, o)\right)$$

where:

- $\mathcal{O} = \{o_1, o_2, ..., o_N\}$ is the set of the one or more 3D bounding boxes in the ground truth 3D layout,

- $\hat{\mathcal{O}} = \{\hat{o}_1, \hat{o}_2, ..., \hat{o}_N\}$ is the set of the one or more 3D bounding boxes in the respective predicted 3D layout,

- $N$ is the common size of $\mathcal{O}$ and $\hat{\mathcal{O}}$, and
- $l(.,.)$ is a differentiable distance (e.g., the Euclidean distance).

Such a dissimilarity metric thus amounts to a Chamfer distance which measures the dissimilarity between sets of bounding boxes. In such examples, the dissimilarity metric measures the distance between the set of one of more 3D bounding boxes in the ground truth 3D layout $\mathcal{O}$ and the set of one or more 3D bounding boxes in the respective predicted 3D layout $\hat{\mathcal{O}}$. In examples, the common size $N$ of the sets $\mathcal{O}$ and $\hat{\mathcal{O}}$ may contain at least 20 objects (e.g., 50 objects to be arranged). The proposed machine-learning method, therefore, allows the realistic and precise arrangements of densely-furnished scenes. In other words, the proposed solution amounts to a scalable method that is adapted to arrange several items (e.g., at least 20 objects). In addition, the Chamfer distance is more efficient compared to other methods for set comparison (e.g., more efficient than the Earth Mover's distance).

The dissimilarity metric may feature a differentiable distance $l(.,.)$ that is computationally efficient. In fact, the training S110 may comprise evaluations of the differentiable distance, and each evaluation may be parallelized on GPUs. In particular, the training S100 may comprise executing parallel sessions, wherein each session comprises the parallel evaluation of the differentiable distance between each 3D bounding box of the set of one or more 3D bounding boxes in the ground truth 3D layout and the set of one or more 3D bounding boxes in the respective predicted 3D layout. Such a parallelization allows time and resource efficiency.

The differentiable distance may penalize a dissimilarity in dimensions and/or in the semantic category between 3D bounding boxes, and for example may be of the type:

$$l(\hat{o}, o) = \|\hat{x} - x\|_2^2 + K\left(1 - \delta_d(\hat{o}, o)\, \delta_c(\hat{o}, o)\right)$$

where:

- $\hat{x}$, respectively $x$, is a vector of values of spatial parameters of $\hat{o}$, respectively $o$,

- $\|.\|_2^2$ is the Euclidean norm,
- $K$ is a penalty parameter,
- $\delta_d(\hat{o}, o)$ is an indicator function equal to 1 when its arguments $\hat{o}$ and $o$ have same dimensions, 0 otherwise, and
- $\delta_c(\hat{o}, o)$ is an indicator function equal to 1 when its arguments $\hat{o}$ and $o$ have a same semantic category, 0 otherwise.

In examples, for each pair of 3D bounding boxes, one within the set of one or more 3D bounding boxes in the ground truth 3D layout and the other one within the set of one or more 3D bounding boxes in the respective predicted 3D layout, the differentiable distance may compute the Euclidean norm between the values of their spatial parameters (e.g.,

the spatial attributes such as position and orientation). The differentiable distance may also evaluate the dissimilarity in dimensions and/or in semantic categories between the pair of 3D bounding boxes. Therefore, the dissimilarity distance may be named "semantic-aware dissimilarity distance" (e.g., semantic-aware Chamfer distance), because it is aware of (i.e., it takes into account) the semantic category associated with each 3D bounding box when evaluating the dissimilarity between 3D bounding boxes. As a consequence, if a pair of 3D bounding boxes do not share the same spatial dimensions and the same semantic category, a penalty may be applied. The penalty parameter $K$ may be set, in examples, higher than $10^4$ or $10^6$, such as $K = 10^8$.

The loss based on which the training S110 of the function over the dataset is performed may be an expectation value of the type $L(\hat{O}, O) = \mathbb{E}_\sigma\left[\lambda(\sigma)\, d(\hat{O}, O)\right]$, i.e. expectation of the product between the dissimilarity metric $d(\hat{O}, O)$ and a noise-dependent weighting function $\lambda(\sigma)$. The presence of the weighting function facilitates the training phase across different noise levels. In examples, the noise-dependent weighting function $\lambda(\sigma)$ may be chosen, e.g., to get a uniform weighting across noise levels. More precisely, the training loss may evaluate the differences between the ground truth 3D arrangement and the predicted second 3D arrangement of the one or more 3D bounding boxes. The differences may be computed among the spatial attributes and the semantic categories of the 3D bounding boxes in the ground truth scene and in the predicted scene. The dissimilarity metric may compute the Euclidean distance between positions and orientations of 3D bounding boxes in the ground truth scene and in the predicted scene, and additionally compare dimensions and semantic categories of 3D bounding boxes in the ground truth scene and in the predicted scene. Therefore, the training loss may avoid penalizing predictions where objects with equal dimensions and sharing the same semantic category are exchanged in comparison to the ground truth scene.

Implementations of the proposed solution are now discussed.

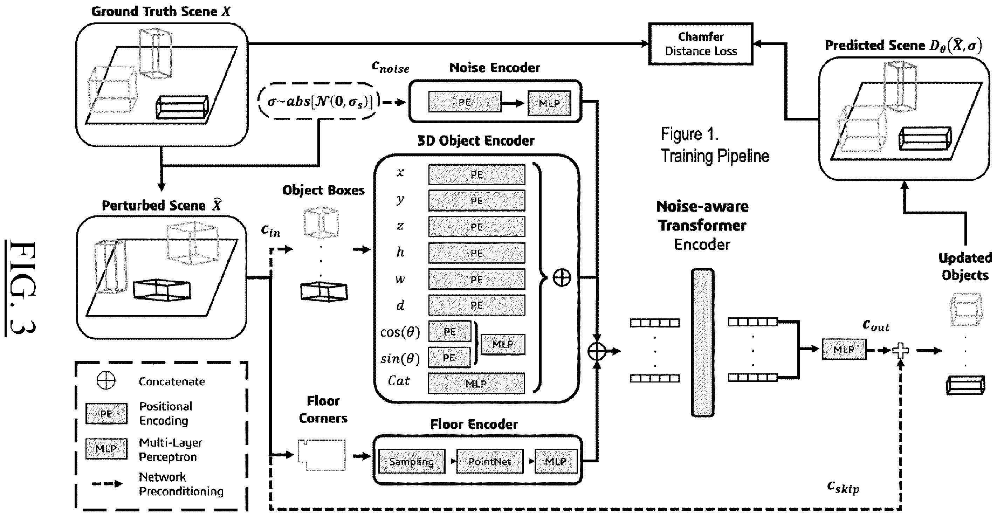

FIG. 3 shows an example of the machine-learning function's architecture.

Referring to FIG. 3, the machine-learning function may feature a transformer encoder denoiser network that may take as input (i.e., is conditioned on) a learned encoded representations of the noise level (i.e., magnitude) $\sigma$ used to perturb the input scene (therefore qualifying the denoiser as being noise aware). The 3D objects of the input scene with some of their features may be perturbed (e.g., position and rotation attributes or position, rotation and bounding box dimensions, etc.), and additional scene-level conditioning features such as the room's floorplan / shape. It may output a predicted clean 3D objects layout.

With reference to FIG. 3, an example of the design of the denoising architecture is now discussed.

An example of the implementation of the deep architecture may be composed of multiple trainable components: a noise encoder (i), a 3D object encoder (ii), a floor encoder (iii), a noise-aware transformer encoder (iv), and/or a final MLP (v) outputting the predicted object position and rotation values.

The following discusses an option of the noise encoder (i).

The sampled noise level $\sigma$ scalar value may be passed through a Positional Encoding (PE) module which deterministically increases the dimension of the scalar value, e.g. from $\mathbb{R}^1$ to $\mathbb{R}^{64}$. Positional encoding enables the generation of diverse representations of the same scalar value, allowing deep learning models to capture more nuanced information when necessary. In the implementation, the PE may be of the type:

$$PE(x) = \left\{ sin\left(128^{\frac{j}{31}}x\right), cos\left(128^{\frac{j}{31}}x\right)\right\}_{j=0}^{31} \in \mathbb{R}^{64}$$

The PE module may be followed by a trainable MLP that maps the encoding from, e.g., $\mathbb{R}^{64}$ to $\mathbb{R}^{768}$. The resulting vector may be a token representing the noise level at which the 3D object spatial attributes have been perturbed.

The following discusses an option of the 3D object encoder (ii).

The scalar values ($p$, $r$, $d$), which describe each 3D bounding box in the scene, may pass through a PE module so they are each represented by a vector, e.g., in $\mathbb{R}^{64}$.

After the PE modules, the position and dimension of the bounding boxes which are respectively originally described by three scalar values may be described by a 192-dimensional vector ($3 \times 64 = 192$). On the other hand, the rotation, which is originally described by a pair of scalar values, may be described by a 128-dimensional vector after the positional encoding. To ensure that the position, dimension and rotation are weighed in similarly by the model, the high dimensional version of the rotation may pass to a multi-layer perceptron which maps it, e.g., from $\mathbb{R}^{128}$ to $\mathbb{R}^{192}$. This improves the model's convergence.

The one-hot encoded category $c$ may be a vector from $\{0,1\}^{174}$. To ensure that the category is weighed in similarly to the position, the dimension and the rotation of the bounding box, the category vector may pass to a multi-layer perceptron which maps it to, e.g., $\mathbb{R}^{192}$. It is common practice to apply such transformations to one-hot encoding as they are not considered to be a meaningfully rich representation. During training, conditioning dropout may also be performed on the encoded category, which means that at each iteration, *c* is replaced by a null token in, e.g., $0^{174}$. It is empirically found that this mechanism helps reducing overfitting of the training spatial configurations $p_{data}(x)$. It also allows the model to generate new layouts both with and without specifying the object categories *c* at sampling time.

All the previously computed vectors may be concatenated in a single vector in $\mathbb{R}^{768}$. This vector may be a token representing a typed object 3D bounding box.

The following discusses an option of the floor encoder (iii).

As a reminder, encoding the room's floor point conditions the 3D layout generation so that the resulting 3D objects lie within the floor limits.

The 3D point cloud of sampled floor points $\mathcal{F}$ may be fed to a PointNet module which may output an embedding vector in, e.g., $\mathbb{R}^{1024}$. This embedding may itself be fed to a multi-layer perceptron which maps the vector to, e.g., $\mathbb{R}^{768}$. This final vector may be a token representing a floor plan.

The following discusses an option of the noise-aware transformer encoder (iv).

The noise level token, 3D objects tokens and the floor token may all be concatenated to form a sequence of tokens. These tokens may be independent from one another. In order to capture relationships between the different elements of this sequence, a transformer module may be used. Transformer modules require a fixed input size because of their intrinsic architecture. However, the sequence built through the concatenation of the outputs may have a variable length as the number of 3D bounding boxes in a scene varies from a scene sample to another. To be compatible with the Transformer architecture, the sequence may be padded with "zero" tokens (e.g., $0_{\mathbb{R}^{768}}$) so that the sequence is of fixed length. Scenes that have less than 50 objects are padded accordingly. The sequence may therefore be represented as a tensor, e.g., from $\mathcal{M}_{768 \times 52}(\mathbb{R})$. This tensor may be fed to the transformer module, which outputs the final scene embedding tensor of the same dimension. A Boolean padding mask, indicating the indices of the sequence that are padding "zero" tokens, may also be passed to the Transformer as an additional input. This mask may be used in the self-attention mechanism to zero out the attention scores for padding tokens.

The following discusses an option of the final MLP (v).

New representations computed by the transformer for each 3D object may be finally passed to an MLP that outputs a tensor $\hat{x}$, e.g., in $\mathbb{R}^{N \times 5}$, indicating the predicted "clean" positions $\hat{p}$ and rotations $\hat{r}$ for each 3D object.

The resulting architecture has a total of 12.2 million trainable parameters.

The preconfigured function may be a noise-conditioned denoiser network $D_\theta$ that takes as input noisy (i.e., perturbed) object 3D spatial attributes $x + \sigma\epsilon$ (e.g., objects position, rotation and dimensions), a floorplan $\mathcal{F}$ and a list of object semantic categories c and outputs clean 3D spatial attributes $\hat{x}$, it may be represented by

$$D_\theta(x + \sigma\epsilon; \mathcal{F}, c, \sigma) = \hat{x}$$

The output $\hat{x}$ of the preconfigured function $D_\theta$ is the (predicted) second value of the predetermined set of one or more bounding box parameters.

In such an example of implementation, during the inference phase, the use method is employed to evaluate candidate sets of object semantic categories within a given floorplan.

However, other use cases of the use method can be similarly achieved and implemented. For example, another use case of the use method may be the evaluation of a set of candidate floorplans with the given set of object semantic categories.

The training performed with the that conditioning drop-out may be performed on the semantic categories inputs, so that sets of categories candidates can be evaluated at the inference phase using the computer-implemented use method. More precisely, at each training iteration, the probability drop-out is set to *p* = 0.2, thus the set of categories candidates $c = \{c_i\}_{i=1}^{N}$ is drop-out with probability *p*, otherwise it conditions the denoiser's output. That way, the model (i.e., the preconfigured function) is able to recover clean attributes both conditionally (*c* is given) and unconditionally (*c* is set to the empty input Ø).

The training phase may be performed on a loss which penalizes a dissimilarity metric between each ground truth 3D layout and a respective predicted 3D layout obtainable by applying the function to the respective perturbed 3D layout. In the current implementation the loss may be the Chamfer distance $\mathcal{L}_{CD}$ (i.e., the dissimilarity metric is taken to be the Chamfer distance, d = $\mathcal{L}_{CD}$).

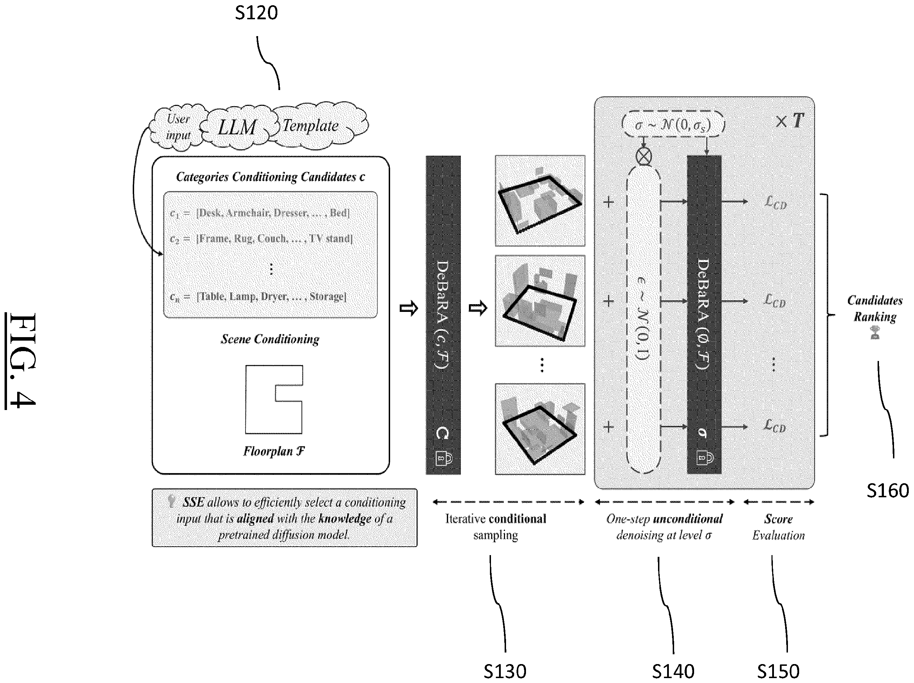

Referring to FIG. 4, the inference phase is now described. On FIG. 4, the machine-learning function (obtained at S10 in reference to FIG. 1) is noted DeBaRA.

The set of conditioning inputs may be a set of $C$ sets of semantic categories candidates S120 with the same given floorplan.

In other examples of implementation of the proposed solution, the set of conditioning inputs may be a set of floorplans with the same given semantic categories.

For each conditioning input, the use method may determine one or more conditioning candidate 3D layout. Each conditioning candidate 3D layout is the result of an iterative (conditional) sampling S130 with DeBaRa. In other words, each conditioning candidate 3D layout is a 3D layout sampled from the learned conditional density, i.e.,

$$candidates = \left\{ \left( c_j, x_j \sim p_\theta \left( x | \mathcal{F}, c_j \right) \right) \right\}_{j=1}^{C}$$

where $C$ is the number of conditioning candidates and $p_\theta$ is the density represented by the neural network of parameters $\theta$. The method of use may comprise also determining a plurality of perturbed conditioning candidate 3D layouts, each by adding a respective noise to a respective conditioning candidate 3D layout $x_i$. In the example of the implementation, each of the obtained conditioning candidate 3D layouts at S130 is first perturbed and then a one-step unconditional denoising at level $\sigma$ (i.e. the unconditional DeBaRa model) is applied to each perturbed conditioning candidate 3D layouts at S140. The noise level $\sigma$ used to perform the unconditional denoising step is also the noise level at which the perturbed 3D layout has been perturbed.

As a result of the inference phase (i.e., of the use method), for each conditioning candidate 3D layout $x_i$, the averaging of the reconstruction error amounts to the score evaluation S150. The proposed method is named Self-Score Evaluation (SSE) method because it adopts a score-based/diffusion generative model to evaluate (by performing an unconditional density estimate) a sample $x_i$ conditionally generated by the model itself.

The use method may comprise ranking S160 conditioning candidate 3D layouts based on their respective scores, e.g., starting from a lowest score, i.e., the best conditioning candidate 3D layout is that one with the lowest score. Thus, the optimal (i.e., the best) conditioning candidate 3D layout $x^*$ is that conditioning candidate 3D layout that minimizes the averaged reconstruction error between itself (i.e., $x_i$) and the corresponding output obtained by applying the unconditional DeBaRa model to the perturbed conditioning candidate 3D layout (i.e., $D_\theta(x_i + \sigma\epsilon; \mathcal{F}, \emptyset, \sigma)$). In formula:

$$x^* = argmin_{x_i} E_{\epsilon,\sigma}[\mathcal{L}_{\mathcal{CD}}\{D_\theta(x_i + \sigma\epsilon; \mathcal{F}, \emptyset, \sigma), x_i\}]$$

In this example of the implementation of the proposed solution, the reconstruction error is computed using the Chamfer distance between the conditional output $x_i$ and the respective unconditional output $D_\theta(x_i + \sigma\epsilon; \mathcal{F}, \emptyset, \sigma)$.

In other words, the optimal candidate is derived from a density estimate of its corresponding 3D spatial layout provided by the unconditional network.

A couple of examples illustrating a practical implementation of the SSE are now described.

*a. Monte Carlo estimation.*

A detailed pipeline of this first inference procedure is illustrated in FIG. 4.

Such a first approach of SSE amounts to conditionally obtain one or more conditioning candidate 3D spatial layouts for each obtained conditioning inputs S120 by means of an iterative conditional sampling S130 with 50 sampling steps. Then, the next step in the pipeline is to apply the preconfigured function to the determined perturbed conditioning candidate 3D layout with a conditioning drop-out (thereby obtaining a respective unconditional output), i.e., to perform S140 a one-step unconditional denoising at level $\sigma$ (e.g., an unbiased Monte Carlo estimate) for each conditioning candidate 3D layout. The one-step unconditional denoising at level $\sigma$ may be performed multiple times, e.g., for $T$ denoising trials (i.e., evaluation iterations, e.g., $T = 50$) and for each trial, a pair $(\sigma, \epsilon)$ of noise level and noise value may be sampled and the respective noise perturbation $\sigma\epsilon$ may be applied to each conditioning candidate 3D layout. In other words, the pair $(\sigma, \epsilon)$ of noise level and noise value is fixed candidate-wise at each trial (i.e., at each evaluation iteration) as shown below in an example of an algorithm for the conditioning candidates evaluation. Consequently, upon computing a reconstruction error between the conditioning candidate 3D layout and the respective unconditional output and further averaging the reconstruction errors over the plurality of perturbed conditioning candidate 3D layouts, the score evaluation S150 is performed with the ranking of the candidates S160.

In other words, in such a first approach, the conditional layout generation stage S130 (i.e., obtaining a conditioning candidate layout $x_i$ for each conditioning input $c_i$ via iterative sampling using the conditional model) and the unconditional score evaluation stage S140 (i.e., computing the mean reconstruction error when denoising perturbed conditioning candidate layouts $x_{i_\sigma}$ using the unconditional model) are performed separately.

An example of an algorithm for the conditioning candidates evaluation (i.e., the SSE method of the disclosed solution) is detailed here below:

```
Algorithm Conditioning Candidates Evaluation
Require: a diffusion prior Dθ trained with conditioning dropout and by optimizing LCD
Input: conditioning candidates {cj}j=1^C (set of object semantic categories), number of score evaluation trials T
    sample xj ~ pθ(x|F, cj) for each candidate cj using iterative sampling
    initialize scores[cj] = list() for each cj
    for trial t = 1, ..., T do
        sample σ ~ N(0, σs); ε ~ N(0, I)
        for candidate ck, sample xk do
            scores[ck].append(LCD[Dθ(xk + σε; F, ∅, σ), xk])
        end for
    end for
    return arg min_cj mean(scores[cj])
```

Also note that the loss (e.g., the Chamfer distance $\mathcal{L}_{CD}$) used to measure the optimal candidates during this inference stage can differ from the one used during the training phase. For instance, it has been experimentally observed that using a noise-dependent weighting term $\lambda(\sigma)$ of the loss hurts the accuracy of the model in the inference phase. Thus, in order to improve the accuracy in the inference phase, the noise-dependent weighting term may be set to $\lambda(\sigma) = 1$, while sampling noise scales $\sigma \sim abs[\mathcal{N}(0, \sigma_s)]$ at each evaluation trial.

Moreover, it is noted that the Chamfer distance loss may be replaced by a Mean Squared Error (MSE) between predicted $\hat{x}$ and ground truth spatial features $x$. This was tested and similar performance has been obtained. This highlights the robustness of the disclosed solution, as the reconstruction loss (i.e., the reconstruction error) computed during the inference method may not necessarily be the same loss computed during the training of the diffusion model.

Furthermore, the present approach differs from diffusion classifiers in the prior art, that assume uniform prior probability for the conditioning probabilities. In other words, in the present approach, the prior probability for the conditioning probabilities $p(c_j)$ is not assumed to be uniform as some conditioning inputs may not lead to a plausible arrangement at all. As a result, density estimates of observed samples generated by the class-conditioned model are computed using the unconditional one, while diffusion classifiers compute density estimates of a single observed sample using the class-conditioned model.

*b. Score evaluation of sampling time*

Such a second approach of SSE amounts to conditionally obtain one or more conditioning candidate 3D spatial layouts for each conditioning input S120 at each sampling step of the iterative conditional sampling. In other words, this second approach performs jointly the conditional layout generation stage S130 and the unconditional score evaluation stage S140.

At each sampling step and for each conditioning input $c_i$, it is computed the reconstruction error between the (intermediate) conditional output in the conditioning candidate 3D layout predicted from the current intermediate iteration of the conditional model (i.e., the network output that is used to iteratively produce the conditioning layout $x_i$) and the unconditional output obtained by applying the unconditional model on the perturbed intermediate conditioning candidate 3D layout. Compared to the conditional iterative sampling that is performed in the first approach a), it means that an additional unconditional network application is performed at each step to evaluate the reconstruction error against the conditioning candidate 3D layout being generated, i.e.:

$$\mathcal{L}_{CD}\left[D_\theta\left(x_{i_\sigma}; \mathcal{F}, c_i, \sigma\right), D_\theta\left(x_{i_\sigma}; \mathcal{F}, \emptyset, \sigma\right)\right]$$

where $\sigma$ is the noise level associated to the current sampling step and $x_{i_\sigma}$ is the layout being conditionally sampled at this step for the conditioning candidate $c_i$.

In this example of the implementation of the proposed solution, the reconstruction error is computed using the Chamfer distance between the intermediate conditional output $D_\theta(x_{i_\sigma}; \mathcal{F}, c_i, \sigma)$ and the respective unconditional output $D_\theta$

$(x_{i_\sigma} ; \mathcal{F} , \varnothing, \sigma)$.

Again, the conditioning candidate that minimizes the reconstruction error averaged on several sampling steps is the best candidate of the ranking. In practice, during the iterative sampling with 50 steps, the reconstruction error is only computed between, e.g., step 10 and step 40, because high and low noise levels tend to bias the estimation and severely hurt the accuracy. It is also remarked that a MSE loss may be applied instead of the training one, i.e., the Chamfer distance $\mathcal{L}_{\mathcal{CD}}$ loss.

Additionally, it is noted that the diffusion loss may be computed object-wise. In such an implementation of the use method, the use method may comprise identifying one or more elements of the obtained set of conditioning inputs that maximizes and/or minimizes the reconstruction error of an obtained set of conditioning inputs. The one or more elements of the set of conditioning inputs may be a floorplan and/or one or more semantic categories. For example, the use method may comprise identifying the 3D object of a conditioning candidate that maximizes the reconstruction error, so as to be removed or replaced it. Similarly, the use method may comprise identifying the 3D object of a conditioning candidate that minimizes the reconstruction error, so as to be inserted to a current scene configuration.

Some quantitative and qualitative experiments of the disclosed method are now discussed.

Such quantitative and qualitative experiments of the disclosed method were performed on the publicly available 3D-FRONT® dataset. The following results have been obtained by applying the Monte Carlo estimation method (a) for the SSE as described above.

*Binary Classification.*

The objective of binary classification is to discriminate perturbed conditioning candidate from the ground truth one.

To this aim, the denoiser has been trained on the 3D-FRONT®bedroom subset with the objective to assess the efficiency of the present method on a toy binary classification task. More precisely, the binary classification tests the ability of the inference method to discriminate the ground truth (good) set of object semantic categories from a (corrupted or adversarial) set that has been randomly perturbed by replacing one or several object categories by random ones. This binary classification has been performed on each of the 162 scenes of the test set to compute an accuracy percentage for several settings based on how perturbed is the adversarial set. It has been set $T$ = 100 for the number of evaluation trials. For each setting, the experiment has been repeated a dozen times.

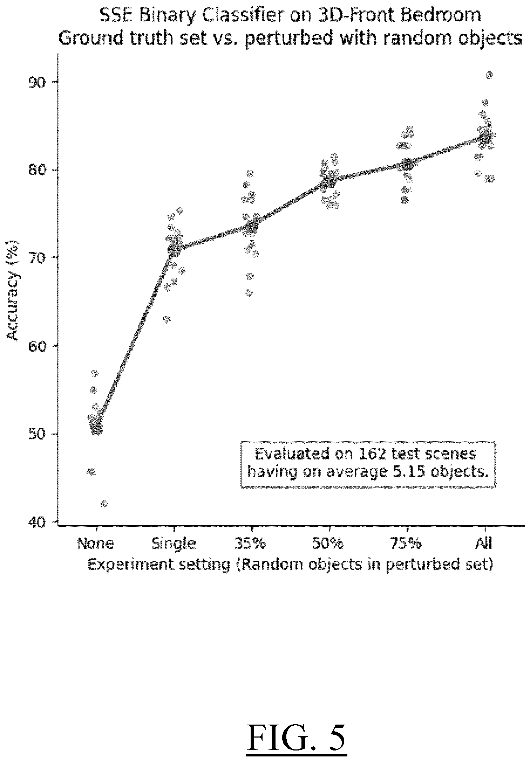

FIG. 5 shows the results of the experiment of binary classification.

The binary classification tested six different settings. In the "None" setting, the adversarial set is the ground truth set, i.e., no object category has been replaced by a random one. Thus, the "None" setting corresponds to classifying the ground truth set vs. itself. Obviously, the expected accuracy is (around) 50%. In the "Single" setting, only one object category is replaced by a random one in the perturbed adversarial set, whereas in the "All" setting, all the object categories are replaced by random ones. The significant gap of the accuracy percentage between the "None" setting and the "Single" setting shows that the disclosed solution for SSE is able to identify a subtle change in a good conditioning input. As it is apparent, the accuracy percentage increases when the corrupted adversarial set contains more randomly replaced object categories with respect to the ground truth set, thereby showing that the disclosed solution for SSE is able to better identify adversarial sets that are more corrupted.

*3D Scene Synthesis.*

A quantitative comparison in the context of 3D scene synthesis is now discussed. The comparison takes into account the quantitative indicators obtained by the use method combined with four different methods for obtaining a set of semantic categories (LayoutGPT, Dataset Random, LLM, and LLM+SSE) and other three methods for 3D scene synthesis known in the prior art (LayoutGPT, ATISS, DiffuScene)

The objective is to employ the use method to select conditioning candidates (i.e., conditioning inputs) obtained by a Large Language Model (LLM), each conditioning candidate being associated to one or more 3D layouts generated by the use method.

To this aim, the denoiser has been trained on 3D-FRONT® living and dining room subsets. The training of the 3D layout generation method has been performed with conditioning drop-out on the set of semantic categories.

The use method may use different sources for obtaining a set of conditioning inputs (in this specific case, the set of semantic categories) to generate 3D layouts. In the quantitative comparison, the use method may take as input the set of semantic categories generated by:

*LayoutGPT.*

The use method may take as input a set of semantic categories generated by the LayoutGPT method. The LayoutGPT method is available at the following URL at the priority date of the present patent application: https://layoutgpt. github.io/.

*Dataset Random.*

The use method may randomly select a set of semantic categories from the training set to generate test 3D layouts.

*Large Language Model (LLM).*

The use method may randomly select a set of semantic categories from sets generated by an LLM. More precisely, the use method may comprise the *LayoutGPT* method to generate the set of semantic categories, and may randomly select one set from those sets that have the same number of objects as the considered ground truth test scene.

*Large Language Model and Self-Score Evaluation (LLM + SSE).*

This setting is similar to the LLM setting above, but instead of randomly selecting a set of semantic categories as above, the use method (i.e., the self-score evaluation method) is first used to select the most appropriate set of semantic categories from those (candidate) sets having the same number of objects as the ground truth scene. This setting is, therefore, directly comparable to the previous one (LLM) and assesses the effectiveness of the use method (SSE).
LLM-based methods are implemented using a publicly-available Llama-3-8B model (available at the following URL at the priority date of the present patent application: https://huggingface.co/meta-llama/Meta-Llama-3-8B).
As LLMs often produce out-of-distribution sets, using DeBaRA (i.e., the preconfigured function) together with the disclosed SSE procedure on generated semantic categories consistently improves realism and validity of the synthesized indoor scenes.
The quantitative indicators to evaluate the realism and the diversity of the generated 3D layouts may be the $256^2$ Fréchet Inception Distance (FID), Kernel Inception Distance (KID x 1000) and the Scene Classification Accuracy (SCA) computed on top-down orthographic renderings. The generation spatial validity may be further assessed by reporting the cumulated out-of-bound objects area (OBA $m^2$). All the metrics may be computed across each test subset. FID and KID compare the distributions of visual features extracted from a pretrained convolution neural network. SCA measures how a convolutional neural network discriminates real scenes (i.e., the ground truth test scenes) from the generated ones, in a binary classification task. Therefore, a SCA score closer to 50% is better, meaning that generated scenes are indistinguishable from real scenes.
The following table shows a quantitative comparison between three methods for 3D scene synthesis known in the prior art (e.g., LayoutGPT, ATISS, DiffuScene) and the preconfigured function DeBaRa combined with four different methods for obtaining a set of semantic categories as outlined above in the description:

| Methods | | Living Rooms | | | | Dining Rooms | | | |
|---|---|---|---|---|---|---|---|---|---|
| | | FID ($\downarrow$) | KID ($\downarrow$) | SCA (%) | OBA ($\downarrow$) | FID ($\downarrow$) | KID ($\downarrow$) | SCA (%) | OBA ($\downarrow$) |
| LayoutGPT [8] | | 34.26 | 10.17 | 72.1 | 2902.7 | 37.78 | 11.31 | 60.2 | 1982.1 |
| ATISS [30] | | 27.02 | 10.99 | 73.0 | 848.4 | 28.26 | 9.28 | 58.2 | 759.1 |
| DiffuScene [42] | | 21.64 | 5.94 | **66.0** | 323.1 | **23.85** | 5.66 | 54.6 | 289.8 |
| **DeBaRA** | *LayoutGPT* | 20.97 | 3.53 | 69.8 | 193.0 | 26..67 | 7.14 | 56.6 | 151.8 |
| | *Dataset Random* | **19.52** | **3.53** | 67.6 | **159.0** | 25.45 | **5.11** | **52.5** | **139.5** |
| **DeBaRA** | *LLM* | 21.58 | 3.53 | 72.4 | 154.3 | 27.09 | 7.38 | 60.5 | 140.4 |
| | *LLM + SSE* | **20.59** | **3.47** | **70.7** | **152.0** | **24.50** | **5.34** | **54.0** | **134.4** |

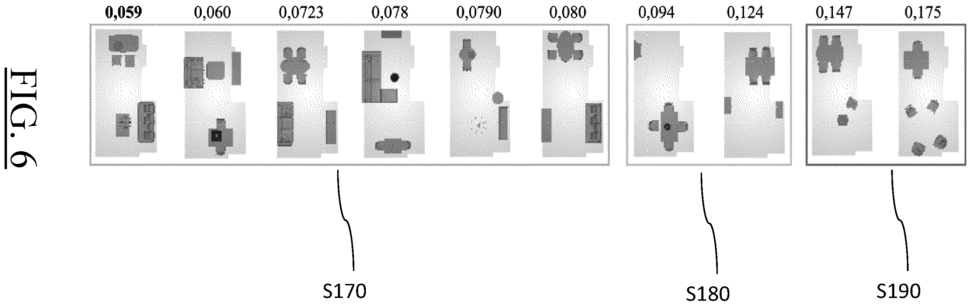

FIG. 6. shows top-down views of 3D scenes generated by DeBaRa from several conditioning candidates produced by a LLM and their associated SSE values. It is apparent that the results S170 with lower scores correspond to more natural-looking and realistic 3D layouts in comparison with the results S180 and S190 corresponding to higher SSE values.

For the sake of completeness, it is also provided the generation time with and without applying the disclosed conditioning evaluation method. Generation times are averaged on the 3D-FRONT® living room test subset. The results are:

- generation of a single layout with 50 sampling steps: 0.488 second;
- generation and evaluation of 16 candidates with 50 sampling steps and 100 evaluation trials: 0.894 second (with batched implementation);
- generation of a single layout using DiffuScene: 32.796 seconds.

Times were computed using a single GPU (NVIDIA RTX A6000). Despite the additional network application steps induced by using the disclosed conditioning evaluation method, the proposed solution provides a fast, real-time generation of 3D layouts in less than a second.

The learning method is a method of machine-learning of a model, which is a deep generative model. As known *per se* from the field of machine-learning, the processing of an input by a model includes applying operations to the input, the operations being defined by data including weight values or parameters. Learning a model (*e.g.* a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "training is performed over the dataset", it is meant that the dataset is a learning/training dataset of the model, based on which the values of the weights/parameters are set. In the present disclosure, the training dataset is the obtained dataset of training examples, on which the deep generative model is learnt/trained. In implementations, the training dataset consists of several hundreds of examples each corresponding to a different HPP configuration.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers defines the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the Mean Square Error (MSE). Second, an optimizer, which modifies the model's weights and biases during the training process to minimize the loss function. Each optimizer has its own set of hyperparameters.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

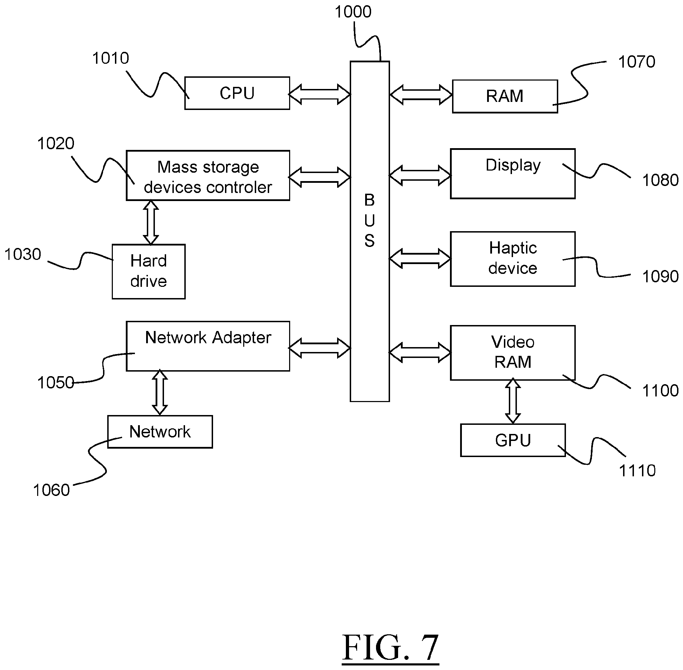

FIG. 7 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the methods to be performed on the cloud computing environment.

## Claims

1. A computer-implemented method comprising:

    - obtaining (S10) a machine-learning function preconfigured:

        • for taking an input 3D layout and a given noise level, a 3D layout having a set of layout parameters including a floorplan, a 3D arrangement of one or more 3D bounding boxes, each bounding box being defined in the 3D arrangement by a value of a predetermined set of one or more bounding box parameters, and a semantic category for each 3D bounding box, the input 3D layout including:

            ∘ a given floorplan,
            ∘ a first 3D arrangement of one or more given 3D bounding boxes, each bounding box being defined in the first 3D arrangement by a first value of the predetermined set of one or more bounding box parameters, and
            ∘ for each given 3D bounding box, a given semantic category, and

        • for predicting an output 3D layout, the output 3D layout including:

            ∘ the given floorplan,
            ∘ a second 3D arrangement of the one or more given 3D bounding boxes, each bounding box being defined in the second 3D arrangement by a second value of the predetermined set of one or more bounding box parameters, and
            ∘ for each given 3D bounding box, the given semantic category,

                the function being configured to predict a second value of the predetermined set of one or more bounding box parameters different from the first value of the predetermined set of one or more bounding box parameters; and
                the function being further preconfigured with a conditioning drop-out with respect to at least one layout parameter, the at least one layout parameter including the floorplan and/or the semantic category for each 3D bounding box;

    - obtaining (S20) a set of conditioning inputs, each conditioning input comprising a distinct value of one layout parameter among the at least one layout parameter, and a same value of each other layout parameter among the floorplan and the semantic category for each 3D bounding box;
- for each conditioning input:

• determining (S30) one or more conditioning candidate 3D layouts, each conditioning candidate 3D layout being a result of an iterative sampling with the preconfigured function;
• determining (S40) a plurality of perturbed conditioning candidate 3D layouts, each by adding a respective noise to a respective conditioning candidate 3D layout;
• for each perturbed conditioning candidate 3D layout:

o applying (S50) the preconfigured function to the perturbed conditioning candidate 3D layout, in which the one layout parameter is dropped out, thereby obtaining a respective unconditional output; and
o computing (S60) a reconstruction error between the respective conditioning candidate 3D layout and the respective unconditional output; and

• averaging (S70) the reconstruction errors over the plurality of perturbed conditioning candidate 3D layouts, thereby obtaining a score.

2. The method of claim 1, wherein the iterative sampling with the preconfigured function comprises iterating:

• injecting a noise to the input 3D layout, thereby obtaining a perturbed input 3D layout;
• applying the preconfigured function at least once to the perturbed input 3D layout, thereby obtaining an output 3D layout; and
• using the output 3D layout as the input of a next iteration,

wherein optionally the noise has a level which decreases with the depth in the iteration.

3. The method of claim 2, wherein applying the preconfigured function at least once comprises, at each iteration:

• applying the preconfigured function to the perturbed input 3D layout, thereby obtaining a first output 3D layout;
• obtaining a first intermediate 3D layout by computing a gradient step between the perturbed input 3D layout and the first output 3D layouts;
• applying the preconfigured function to the first intermediate 3D layout, thereby obtaining a second output 3D layout; and
• obtaining a second intermediate 3D layout by computing a gradient step between the perturbed input 3D layout and the second output 3D layout, thereby obtaining a final 3D layout.

4. The method of any one of claims 1 to 3, wherein the one or more conditioning candidate 3D layouts comprise a final result of the iterative sampling.

5. The method of claim 4, wherein adding the respective noise, for the final result of the iterative sampling, comprises sampling a noise level, and sampling the respective noise according to the sampled noise level.

6. The method of any one of claims 1 to 5, wherein the one or more conditioning candidate 3D layouts comprise one or more intermediate results of the iterative sampling.

7. The method of claim 6, wherein adding the respective noise, for each intermediate result of the iterative sampling, comprises sampling the respective noise according to the noise level of the intermediate iteration of the iterative sampling which corresponds to the intermediate result.

8. The method of any one of claims 1 to 7, wherein the method further comprises ranking conditioning candidate 3D layouts on their respective scores, starting from a lowest score.

9. The method of any one of claims 1 to 8, wherein the preconfigured function is parametrized as follows:

$$D_\theta(x_\sigma; \mathcal{F}, c_i, \sigma) = c_{skip}(\sigma) * x_\sigma + c_{out}(\sigma) * S_\theta\big(c_{in}(\sigma)x_\sigma; \mathcal{F}, c_i, c_{noise}(\sigma)\big),$$

where:

- $x_\sigma$ represents the first 3D arrangement of one or more given 3D bounding boxes,
- $\mathcal{F}$ represents the given floorplan,
- $c_i$ is a list of the given semantic categories,
- $\sigma$ is the given noise level,

- $S_\theta(c_{in}(\sigma)x_\sigma; \mathcal{F}, c_i, c_{noise}(\sigma))$ is a noise-conditioned score network having a set of trainable parameters $\theta$,
- $c_{skip}(\sigma)$ is a noise-dependent pre-conditioning coefficient modulating the predicted 3D layout,
- $c_{noise}(\sigma)$ is a noise-dependent coefficient which conditions the noise level within the score network, and
- $c_{in}(\sigma)$ and $c_{out}(\sigma)$ are two noise-dependent coefficients that scale, respectively, $x_\sigma$ and $S_\theta(c_{in}(\sigma)x_\sigma; y, c_{noise}(\sigma))$.

10. A computer-implemented method for machine-learning the machine-learning function used in a method according to any one of claims 1 to 9, wherein the machine-learning method comprises:

- obtaining (S80) a dataset of ground truth 3D layouts, each ground truth 3D layout representing a respective scene and including:

  - a respective floorplan,
  - a respective 3D arrangement of one or more 3D bounding boxes, each bounding box being defined by a value of a predetermined set of one or more bounding boxes parameters, and
  - for each 3D bounding box, a respective semantic category;

- obtaining (S90) a probability distribution of noise levels;
- for each ground truth 3D layout, obtaining (S100) a respective perturbed 3D layout computable by perturbing at least one bounding box parameter of at least one 3D bounding box of the ground truth 3D layout, the perturbing including:

  - sampling (S100a) a respective noise level based on the probability distribution; and
  - for each respective bounding box parameter of the at least one bounding box parameter:

    o sampling (S100b) a respective noise value based on the respective noise level; and
    o applying (S100c) the respective noise value to the respective bounding box parameter; and

- training (S110) the function over the dataset based on a loss which penalizes a dissimilarity metric between each ground truth 3D layout and a respective predicted 3D layout obtainable by applying the function to the respective perturbed 3D layout, the training being performed with a conditioning drop-out with respect to at least one layout parameter, the at least one layout parameter including the floorplan and/or the semantic category for each 3D bounding box.

11. The method of claim 10, wherein the dissimilarity metric is of the type:

$$d(\hat{\mathcal{O}}, \mathcal{O}) = \frac{1}{2N}\left(\sum_{\hat{o} \in \hat{\mathcal{O}}} \min_{o \in \mathcal{O}} l(\hat{o}, o) + \sum_{o \in \mathcal{O}} \min_{\hat{o} \in \hat{\mathcal{O}}} l(\hat{o}, o)\right)$$

where:

- $\mathcal{O} = \{o_1, o_2, \dots, o_N\}$ is the set of one or more 3D bounding boxes in the ground truth candidate 3D layout,

- $\hat{\mathcal{O}} = \{\hat{o}_1, \hat{o}_2, \dots, \hat{o}_N\}$ is the set of one or more 3D bounding boxes in the predicted 3D layout,

- $N$ is the common size of $\mathcal{O}$ and $\hat{\mathcal{O}}$, and
- $l(\hat{o}, o)$ is a differentiable distance,

wherein optionally the differentiable distance further penalizes the dissimilarity in the dimensions and/or in the semantic category between 3D bounding boxes, and for example is of the type:

$$l(\hat{o}, o) = \|\hat{x} - x\|_2^2 + K\big(1 - \delta_d(\hat{o}, o)\,\delta_c(\hat{o}, o)\big)$$

where:

- $\hat{x}$, respectively $x$, is a vector of values of spatial bounding box parameters of $\hat{o}$, respectively $o$,
- $\|\hat{x} - x\|_2^2$ is the Euclidean norm,
- $K$ is a penalty parameter,
- $\delta_d(\hat{o}, o)$ is an indicator function equal to 1 when $\hat{o}$ and $o$ have same dimensions, 0 otherwise, and
- $\delta_c(\hat{o}, o)$ is an indicator function equal to 1 when $\hat{o}$ and $o$ have a same semantic category, 0 otherwise.

12. The method of any one of claims 10 to 11, wherein the loss of the trained function is an expectation value $\left(L(\hat{O}, O) = \mathbb{E}_\sigma\big[\lambda(\sigma)\,d(\hat{O}, O)\big]\right)$ of the product $(\lambda(\sigma)\,d(\hat{O}, O))$ between the dissimilarity metric $(d(\hat{O}, O))$ and a noise-dependent weighting function $(\lambda(\sigma))$.

13. A data structure including:
a computer program comprising instructions for performing the method of any one of claims 1 to 9 and/or the method of any one of claims 10 to 12, and/or a machine-learning function having been trained by the method of any one of claims 10 to 12.

14. A computer readable storage medium having recorded thereon the data structure of claim 13.

15. A system comprising a processor coupled to a memory, the memory having recorded thereon the data structure of claim 13.

| obtaining a machine-learning function preconfigured for:<br><br>- taking an input 3D layout and a given noise level;<br><br>- predicting an output 3D layout;<br><br>and further preconfigured with a conditioning drop-out | S10 |

↓

| obtaining a set of conditioning inputs | S20 |

↓

for each conditioning input:

| determining one or more conditioning candidate 3D layouts | S30 |

↓

| determining a plurality of perturbed conditioning candidate 3D layouts | S40 |

↓

for each perturbed conditioning candidate 3D layout:

| applying the preconfigured function on the perturbed conditioning candidate 3D layout with a conditioning drop-out, thereby obtaining a respective unconditional output | S50 |

↓

| computing a reconstruction error between the respective conditioning candidate 3D layout and the respective unconditional output | S60 |

↓

| averaging the reconstruction errors over the plurality of perturbed conditioning candidate 3D layouts, thereby obtaining a score | S70 |

## FIG. 1

obtaining a dataset of ground truth 3D layouts — S80

obtaining a probability distribution of noise levels — S90

for each ground truth 3D layout, obtaining a respective perturbed 3D layout: — S100

sampling a respective noise level based on the probability distribution — S100a

for each respective bounding box parameter of the at least bounding box parameter:

sampling a respective noise value based on the respective noise level — S100b

applying the respective noise value to the respective bounding box parameter — S100c

training the function over the dataset, the training being performed with a conditioning drop-out — S110

## FIG. 2

Figure 1.
Training Pipeline

FIG. 3

**FIG. 4**

SSE Binary Classifier on 3D-Front Bedroom
Ground truth set vs. perturbed with random objects

Evaluated on 162 test scenes
having on average 5.15 objects.

FIG. 5

FIG. 6

1000

1010

CPU

1070

RAM

1020

Mass storage
devices controler

Display

1080

1030

Hard
drive

B
U
S

Haptic
device

1090

Network Adapter

1050

Video
RAM

1100

Network

GPU

1060

1110

FIG. 7

**EUROPEAN SEARCH REPORT**

| Application Number |
| --- |
| EP 24 30 6559 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | SIYI HU ET AL: "Mixed Diffusion for 3D Indoor Scene Synthesis", ARXIV.ORG, CORNELL UNIVERSITY LIBRARY, 201 OLIN LIBRARY CORNELL UNIVERSITY ITHACA, NY 14853, 31 May 2024 (2024-05-31), XP091774092, * abstract * * page 1 * * page 3 - page 9 * * page 14 - page 18 * ----- | 1-15 | INV. G06F30/13 G06F30/27 G06N3/045 |
| X | JIAPENG TANG ET AL: "DiffuScene: Denoising Diffusion Models for Generative Indoor Scene Synthesis", ARXIV.ORG, CORNELL UNIVERSITY LIBRARY, 201 OLIN LIBRARY CORNELL UNIVERSITY ITHACA, NY 14853, 12 March 2024 (2024-03-12), XP091692918, * abstract * * page 1 - page 8 * * page 13 - page 15 * ----- | 1-15 | |
| X | QIUHONG ANNA WEI ET AL: "LEGO-Net: Learning Regular Rearrangements of Objects in Rooms", ARXIV.ORG, CORNELL UNIVERSITY LIBRARY, 201 OLIN LIBRARY CORNELL UNIVERSITY ITHACA, NY 14853, 23 January 2023 (2023-01-23), XP091419569, * abstract * * page 1 - page 6 * ----- -/-- | 1-15 | TECHNICAL FIELDS SEARCHED (IPC) G06F G06N |

The present search report has been drawn up for all claims

| Place of search | Date of completion of the search | Examiner |
| --- | --- | --- |
| Munich | 18 February 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 24 30 6559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUANGYAO ZHAI ET AL: "CommonScenes: Generating Commonsense 3D Indoor Scenes with Scene Graphs", ARXIV.ORG, CORNELL UNIVERSITY LIBRARY, 201 OLIN LIBRARY CORNELL UNIVERSITY ITHACA, NY 14853, 16 October 2023 (2023-10-16), XP091636799, * abstract * * page 1 - page 8 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 18 February 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24306557